# EUROPEAN PATENT APPLICATION

(11) **EP 2 597 824 A1**
(43) Date of publication of application: **29.05.2013**
(21) Application number: 11809619.7
(22) Date of filing: 15.07.2011
(51) Int. Cl.: H04L 12/56, G06F 13/00

(54) **PROXY SERVER, RELAY METHOD, COMMUNICATION SYSTEM, RELAY CONTROL PROGRAM, AND RECORDING MEDIUM**

(30) Priority: 20.07.2010 JP 2010163366
(71) Applicant: Sharp Kabushiki Kaisha, Osaka-shi, Osaka 545-8522 (JP)
(72) Inventor: OGISAWA, Yoshiaki, Osaka 545-8522 (JP); TAKAHASHI, Maki, Osaka 545-8522 (JP)
(74) Representative: Müller - Hoffmann & Partner
(86) International application number: PCT/JP2011/066278
(87) International publication number: WO 2012/011449

(57) **Abstract**

A proxy (250) includes (i) a processing section (251) for transmitting information when the proxy detects a video request from a proxy (200), information indicating that the proxy can transmit a certain video by multicast in replacement of a server (300), and (ii) a processing section (253) for registering the proxy (250) in a multicast group when a JOIN message is received from the proxy (200). The processing section (253) relays a video in cache (252) to registered proxies via multicast.

## Description

### Technical Field

The present invention relates to a proxy server of a transmission device, which proxy server relays, to a communication device such as a reproducing device or a proxy server of the reproducing device, data transmitted from the transmission device in response to a request from the communication device, and relates to a relay method carried out by the proxy server. Moreover, the present invention relates to a relay control program that causes a computer to operate as the proxy server, and a recording medium on which the relay control program is stored. Furthermore, the present invention relates to a communication system including at least the proxy server, the communication device, and the transmission device.

### Background Art

In recent years, with the rapid increase in demands on the Internet, the numbers are increasing of users who wish to not only view websites composed of still contents such as text data and still images but also wish to enjoy video contents and audio contents distributed by streaming.

Generally, still contents such as text data and still image data are transmitted and received via unicast communication, such as the http(s). Video contents and audio contents are also often transmitted and received via unicast communication.

Examples of distribution systems for distributing video contents via unicast communication include a system that distributes contents by causing a user to successively download data in MPEG (Moving Picture Expert Group) MP4 file format (Patent Literature 1) and a system that distributes contents by employing a fragment video format in MPEG ISO Media File Format (Patent Literature 2).

Typically, transmission and reception of data via unicast communication is performed after a connection is established between a transmitter and a receiver. Hence, this communication method has a merit that the transmission and reception of data is highly reliable.

### Citation List

### Patent Literature

### Patent Literature 1

Japanese Patent Application Publication, Tokukai, No. 2005-110244 A (Publication Date: April 21, 2005)

### Patent Literature 2

Japanese Patent Application Publication, Tokukai, No. 2007-173987 A (Publication Date: July 5, 2012)

### Summary of Invention

### Technical Problem

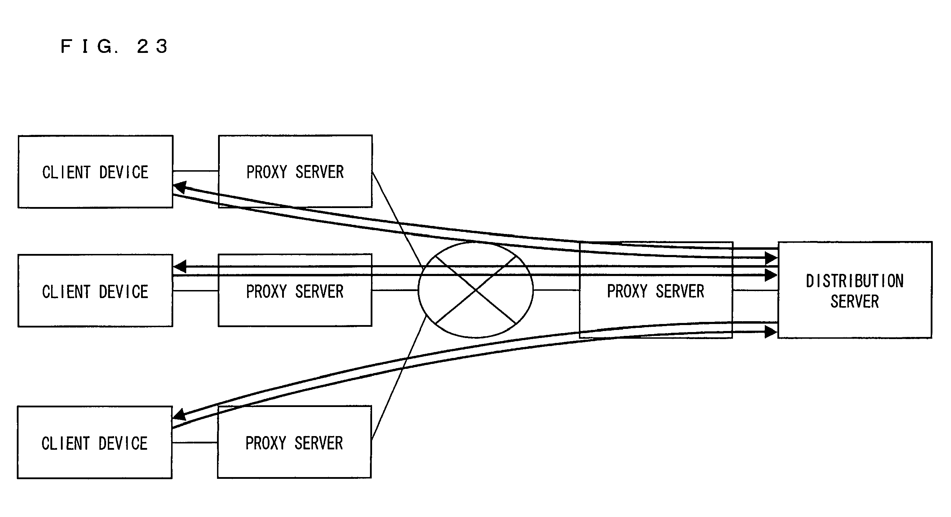

However, the conventional distribution systems employing the unicast communication have the following problem. As shown by the arrows in Fig. 23, in the conventional system, a distribution server distributes video contents independently to each client device that requests for distribution of the contents. Hence, in case distribution requests are received from many client devices at once, this leads to an increase in load on the network band. In addition, there is the need for the distribution server to establish connections with many reproducing devices at once. As a result, a problem arises that processing load on the distribution server itself also increases.

The present invention is accomplished in view of these problems, and a main object thereof is to realize a proxy server of a transmission device, which proxy server is capable of holding down load on a network band caused by data transmitted from the transmission device.

### Solution to Problem

In order to attain the object, a proxy server in accordance with the present invention is a proxy server configured to (i) receive a content transmitted from a transmission device in response to a request from a communication device, (ii) cache the content in a storage section and (iii) relay the content to the communication device, the proxy server including: transmission means for transmitting information to the communication device when the proxy server detects transmission from the communication device to the transmission device of a first request that requests for transmission of a certain content via unicast communication, the information indicating that the proxy server is capable of transmitting the certain content via multicast communication in replacement of the transmission device; registration means for registering the communication device in a multicast group when a second request that requests for transmission of the content via multicast communication is received from the communication device; and relay means for relaying, via multicast communication, the content cached in the storage section to the communication device and any other communication device registered in the multicast group in advance.

The proxy server can be configured in such a manner that, for example, the first request is a HTTP request message, and the transmission means transmits the information as a HTTP response message that includes the information as header information thereof, the header information including a value indicative of an address of the multicast group.

According to the configuration, the proxy server transmits information to the communication device indicating that the proxy server is capable of transmitting, in replacement of the transmission device and via multicast communication, contents to be transmitted to the transmission device in response to a request from the communication device. Thereafter, when the proxy server receives, from the communication device, a request to transmit the contents via multicast communication, the proxy server transmits the contents to the communication device in replacement of the transmission device, via multicast communication.

Therefore, when the transmission device receives the requests for the distribution, via unicast communication, of contents from a plurality of communication devices, the proxy server can distribute contents to the plurality of communication devices via multicast communication.

Consequently, the proxy server of the present invention brings about an effect that, in case the transmission device receives requests, from a plurality of communication devices, to distribute contents via unicast communication, the proxy server of the present invention can hold down the load on the network band caused by data transmission from the transmission device in response to such requests, as compared to that of a conventional proxy server that relays the contents independently transmitted from the transmission device via unicast communication.

In order to attain the object, a relay method in accordance with the present invention is a method for a proxy server configured to (i) receive a content transmitted from a transmission device in response to a request from a communication device, (ii) cache the content in a storage section and (iii) relay the content to the communication device, the method including: transmitting information to the communication device when the proxy server detects transmission from the communication device to the transmission device of a first request that requests for transmission of a certain content via unicast communication, the information indicating that the proxy server is capable of transmitting the certain content via multicast communication in replacement of the transmission device; registering the communication device in a multicast group when a second request that requests for transmission of the content via multicast communication is received from the communication device; and relaying, via multicast communication, the contents cached in the storage section to the communication device and any other communication device registered in the multicast group in advance.

According to the configuration, the relay method of the present invention brings about an effect as with the proxy server of the present invention.

### Advantageous Effects of Invention

As described above, a proxy server of the present invention brings about an effect of allowing for holding down load on a network band caused by data transmission from a transmission device.

### Brief Description of Drawings

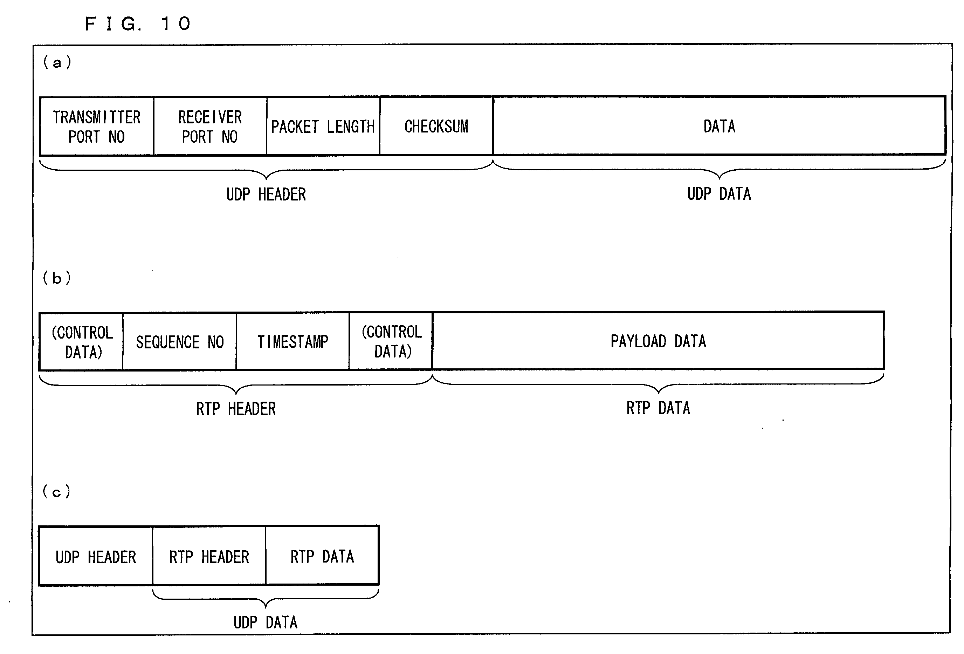

Fig. 1

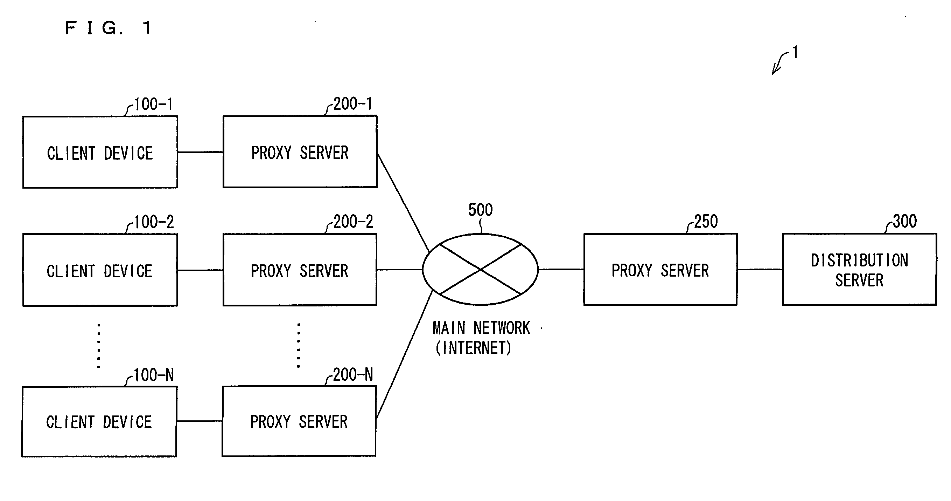

   Fig. 1 is a view illustrating an overall configuration of a distribution system, in accordance with an embodiment of the present invention.
Fig. 2

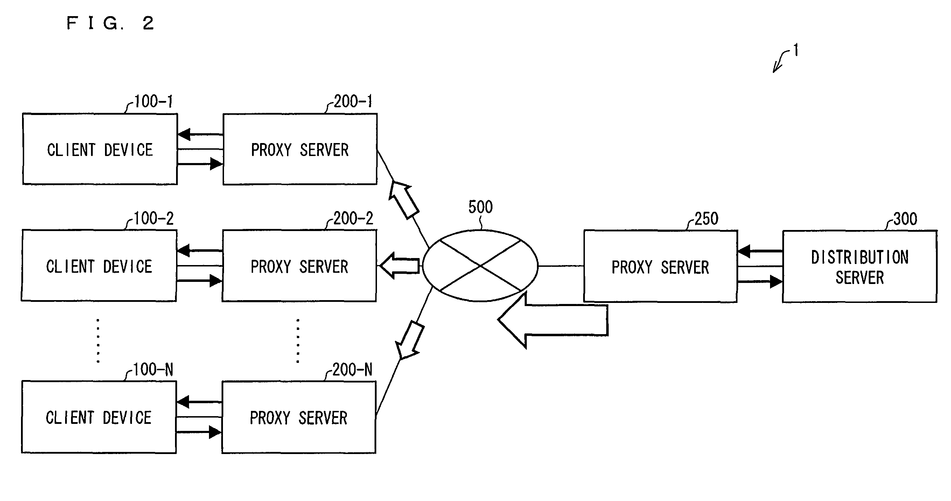

   Fig. 2 is a view schematically illustrating how communication processes are carried out among devices in the distribution system illustrated in Fig. 1, while a video content is being distributed from a distribution server to a client device.
Fig. 3

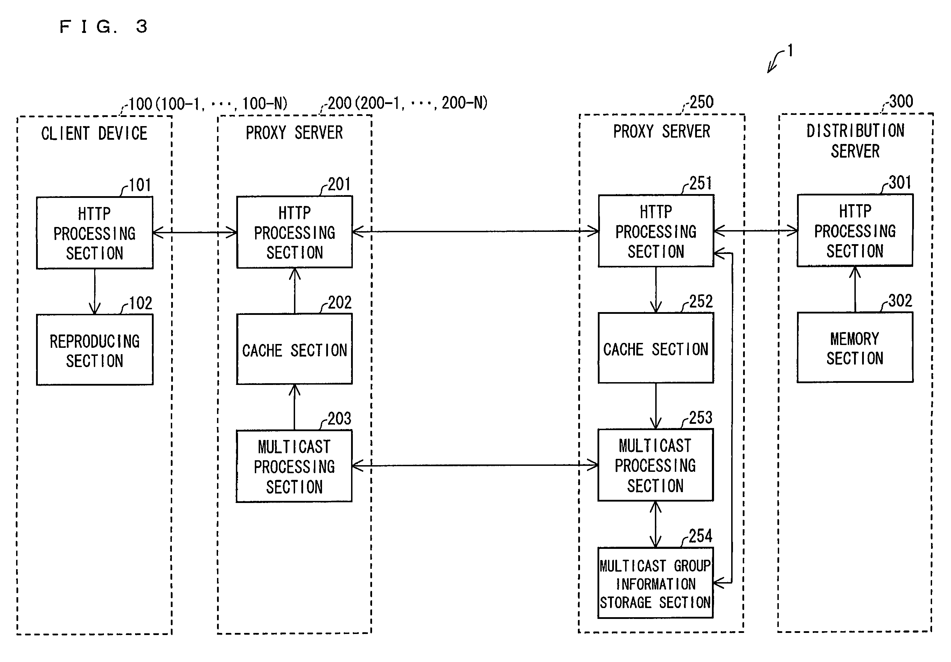

   Fig. 3 is a functional block diagram illustrating detailed configurations of devices that constitute the distribution system illustrated in Fig. 1.
Fig. 4

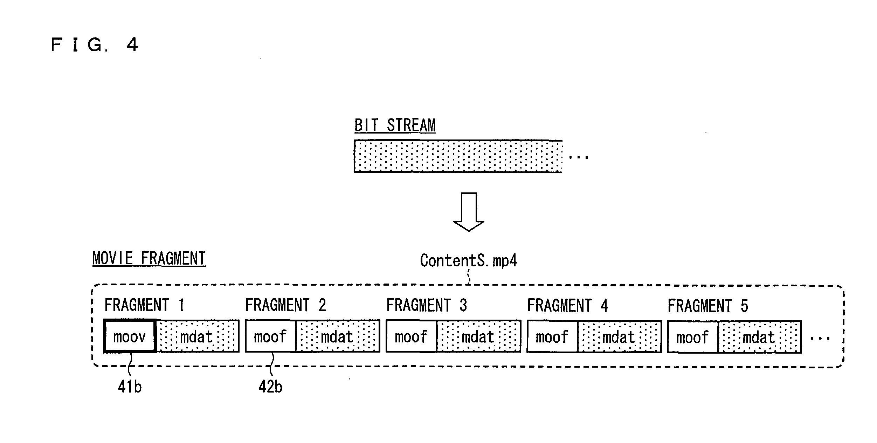

   Fig. 4 is a view schematically illustrating a relation between a bit stream of a video content and a movie fragment.
Fig. 5

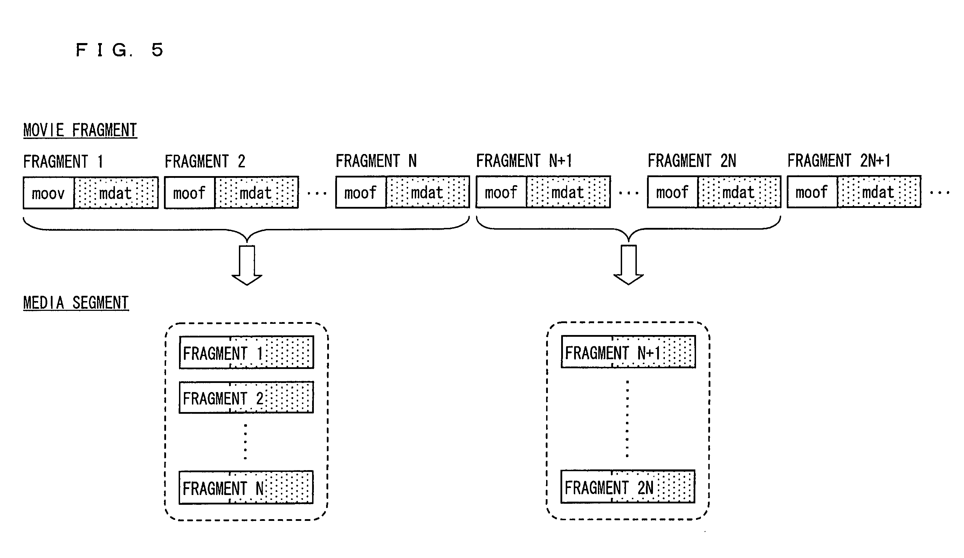

   Fig. 5 is a view schematically illustrating a relation between a media segment and a movie fragment.
Fig. 6

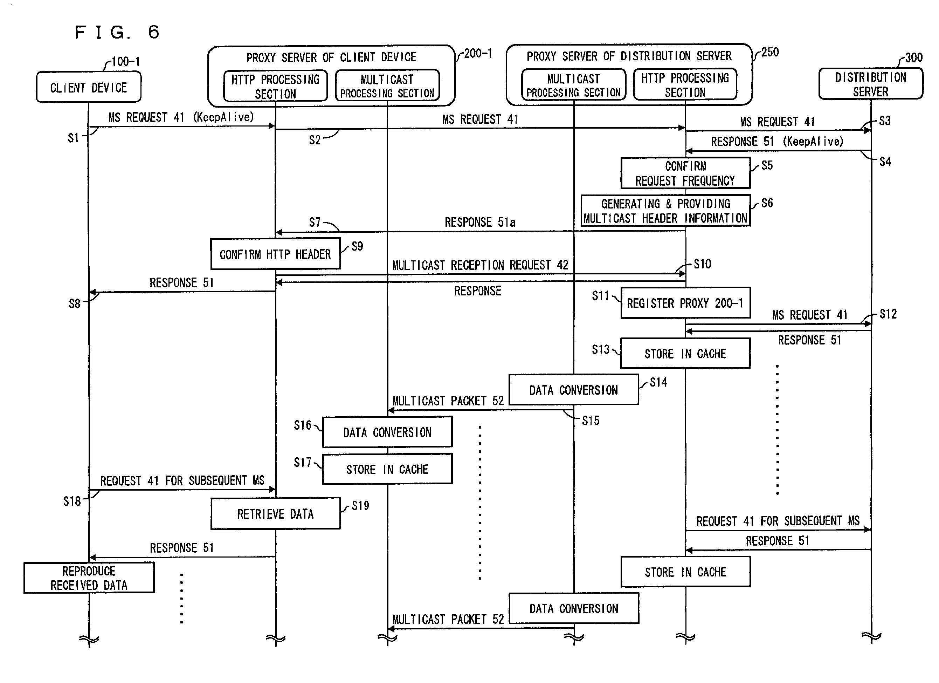

   Fig. 6 is a sequence diagram illustrating a first half of all processes which are carried out by the devices in the distribution system illustrated in Fig. 1, from when a client device requests distribution of a video content to when the distribution of the video content to the client device is completed.
Fig. 7

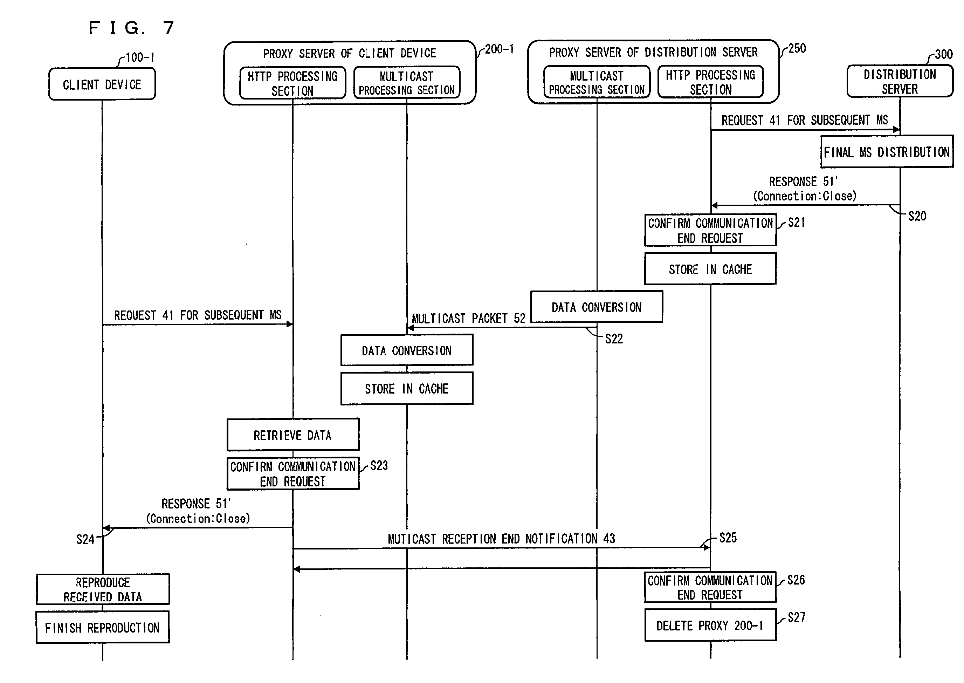

   Fig. 7 is a sequence diagram illustrating a second half of all the processes which are carried out by the devices in the distribution system illustrated in Fig. 1, from when the client device requests distribution of the video content to when the distribution of the video content to the client device is completed.
Fig. 8

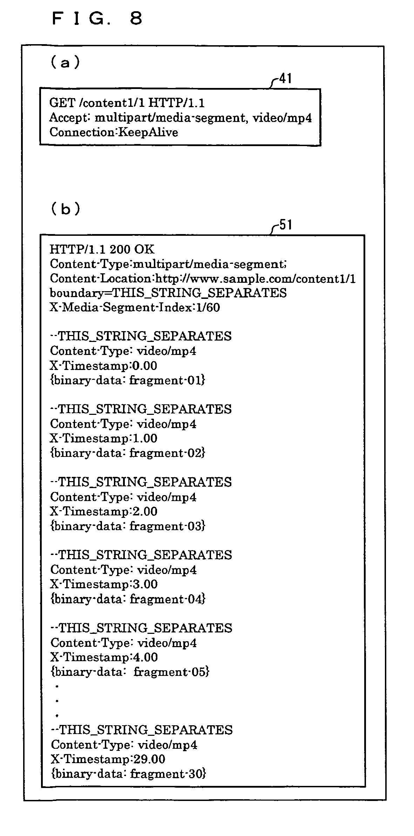

   Fig. 8 is a view illustrating an example of messages transmitted in processes which are illustrated in the sequence diagrams of Figs. 6 and 7; (a) of Fig. 8 is a view illustrating a request message transmitted by a client device, and (b) of Fig. 8 is a view illustrating a response message transmitted by a distribution server.
Fig. 9

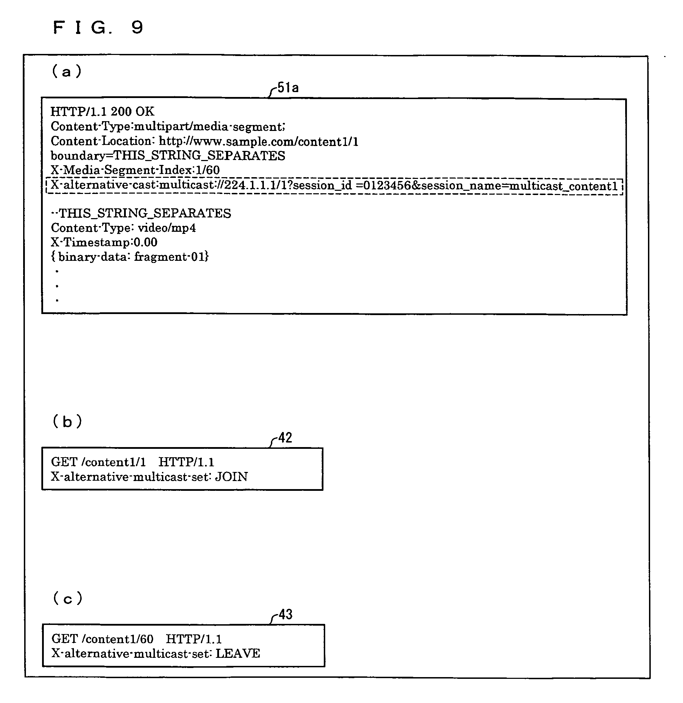

   Fig. 9 is a view illustrating another example of messages transmitted in processes which are indicated by the sequence diagrams of Figs. 6 and 7; (a) of Fig. 9 illustrates a response message transmitted by a proxy server of a distribution server, (b) of Fig. 9 illustrates a JOIN message which (i) is transmitted by a proxy server of a client device, (ii) is in an HTTP message format, and (iii) is a message for joining a multicast group, and (c) of Fig. 9 illustrates a LEAVE message which (i) is transmitted by the proxy server of the client device, (ii) is in the HTTP message format, and (iii) is a message for leaving the multicast group.
Fig. 10
   Each of (a) through (c) of Fig. 10 illustrates a configuration of a multicast packet which is transmitted from a proxy server of a distribution server to a proxy server of a client device, in the distribution system illustrated in Fig. 1.
Fig. 11

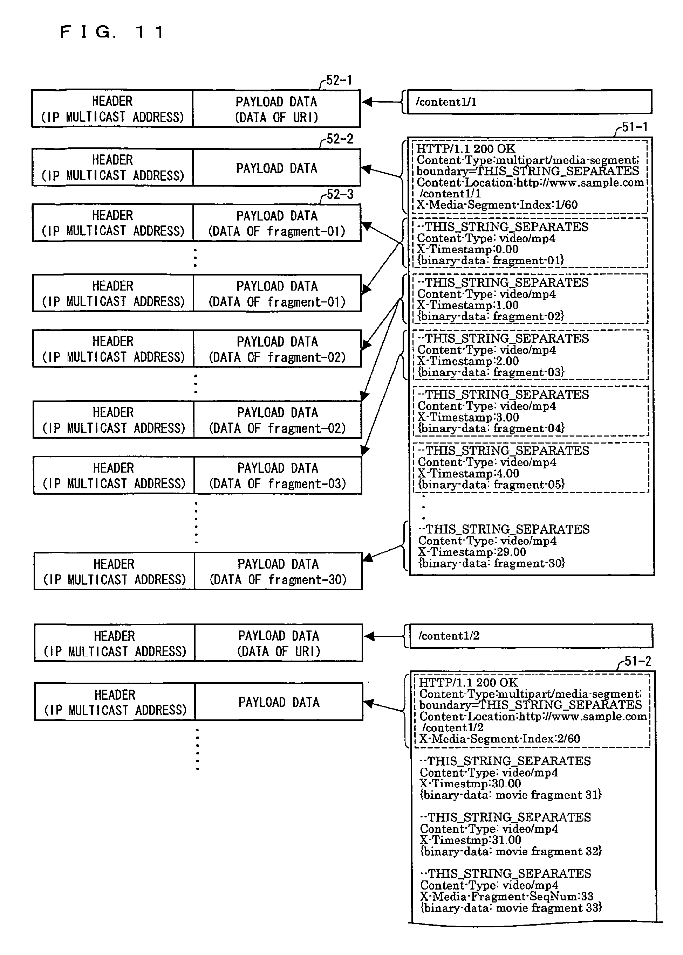

   Fig. 11 is a view concretely illustrating how a proxy server of a distribution server, in the distribution system illustrated in Fig. 1, converts data of a video content, which has been transmitted as an HTTP response message, into a multicast packet.
Fig. 12

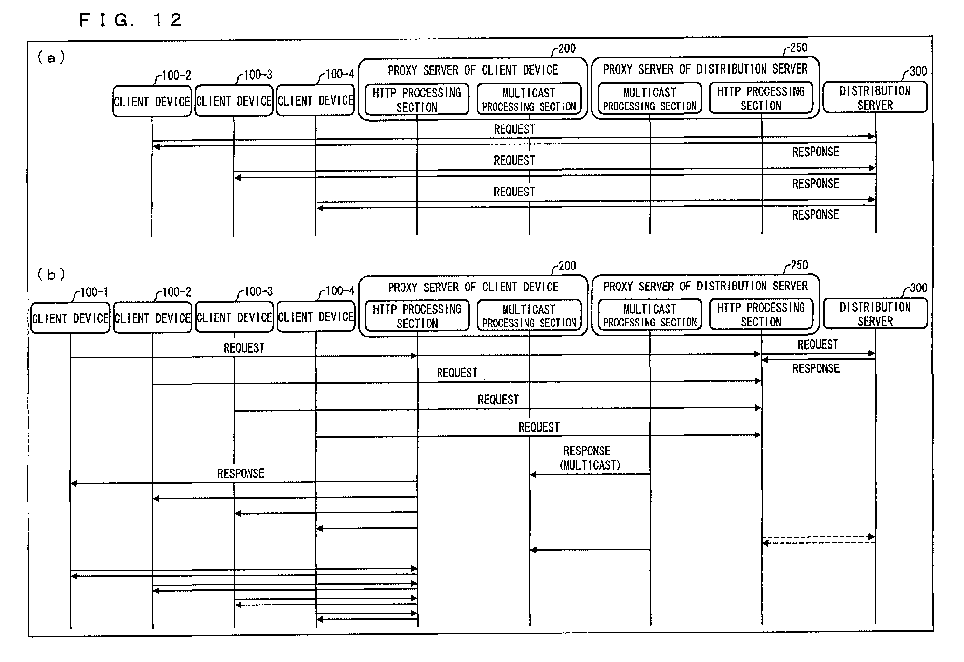

   Fig. 12 is a view schematically illustrating how communication processes are carried out by devices of the distribution system illustrated in Fig. 1; (a) of Fig. 12 illustrates a case where three client devices issue respective distribution requests, and (b) of Fig. 12 illustrates a case where three client devices issue respective distribution requests.
Fig. 13

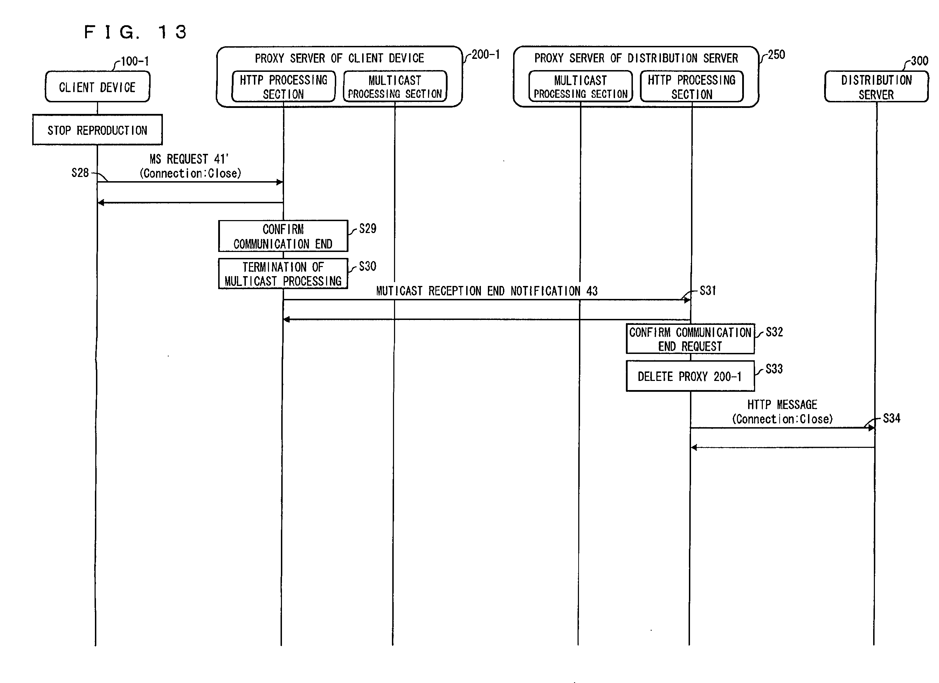

   Fig. 13 is a sequence diagram illustrating a series of processes which are carried out by devices in the distribution system of Fig. 1, in a case where a client device receives, from a user, an instruction to stop reproduction of a video content.
Fig. 14

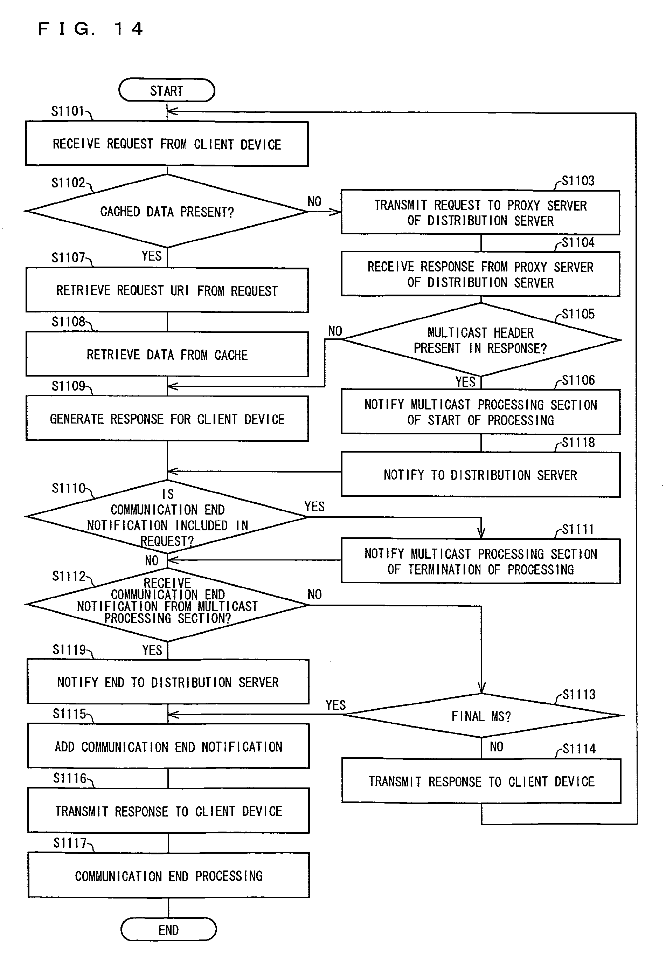

   Fig. 14 is a flowchart illustrating how an HTTP processing section, which is included in a proxy server of a client device, operates in the distribution system illustrated in Fig. 1.
Fig. 15

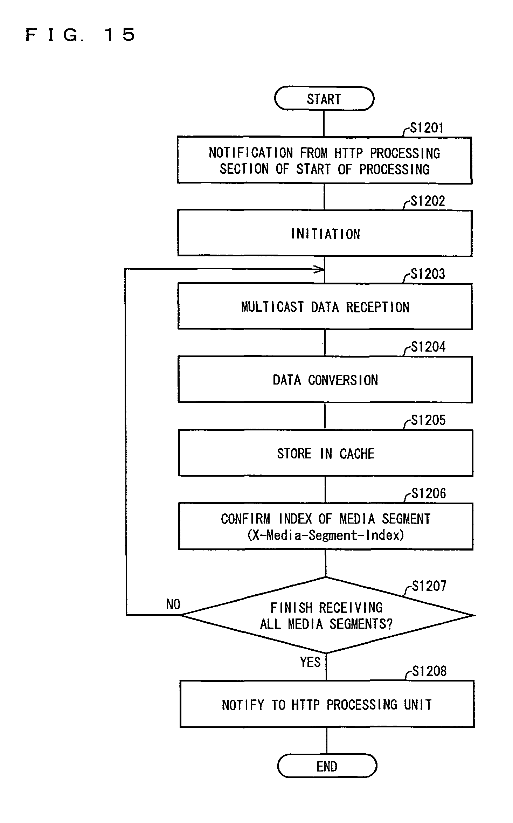

   Fig. 15 is a flowchart illustrating how a multicast processing section, which is included in a proxy server of a client device, operates in the distribution system illustrated in Fig. 1.
Fig. 16

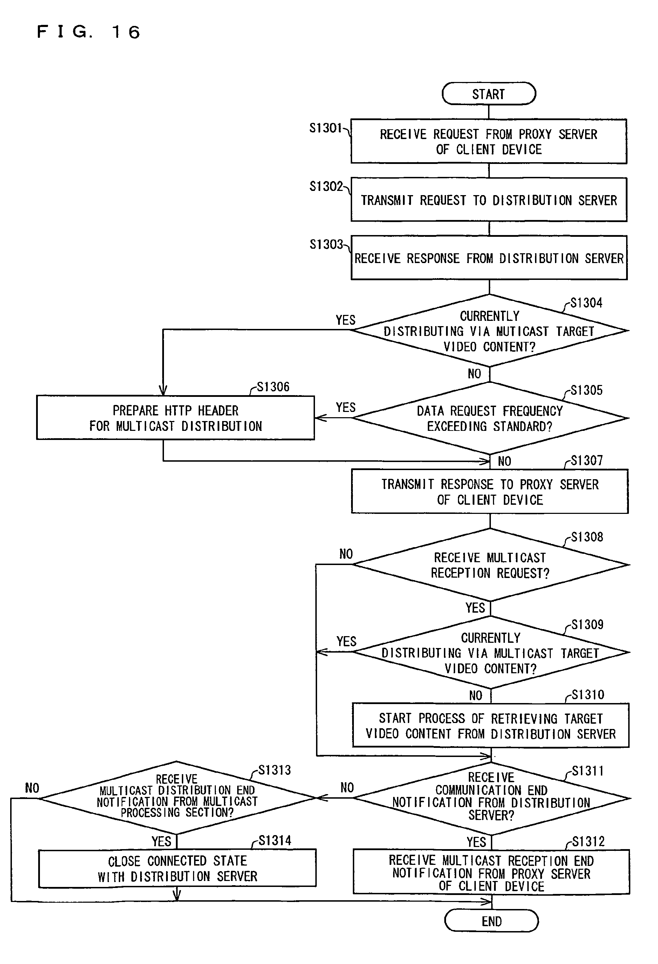

   Fig. 16 is a flowchart illustrating how, in the distribution system illustrated in Fig. 1, an HTTP processing section, which is included in a proxy server of a distribution server, operates upon receipt of a response message whose transmission destination is a proxy server of a client device.
Fig. 17

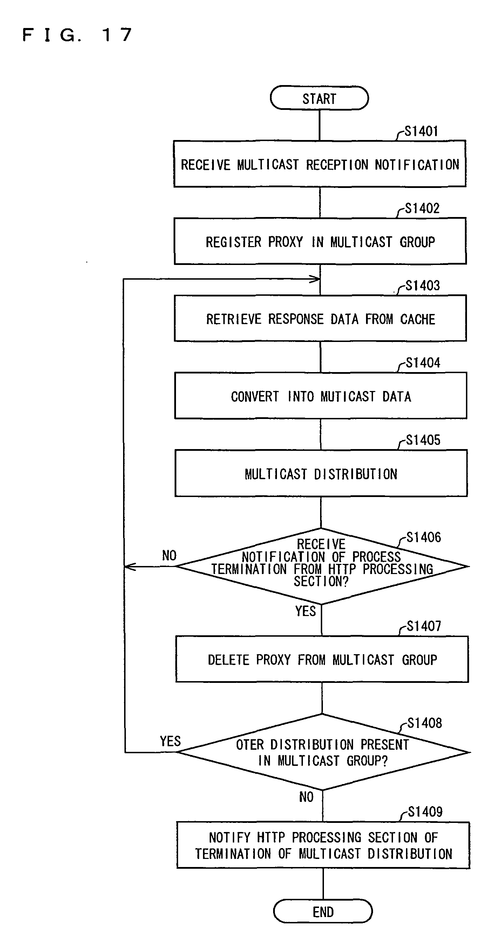

   Fig. 17 is a flowchart illustrating how a multicast processing section, which is included in a proxy server of a client device, operates in the distribution system illustrated in Fig. 1.
Fig. 18

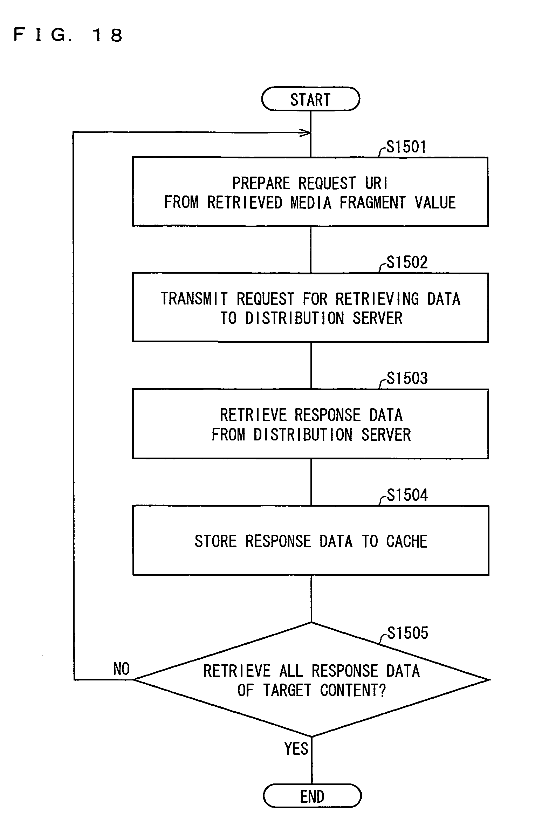

   Fig. 18 is a flowchart illustrating how, in the distribution system illustrated in Fig. 1, an HTTP processing section, which is included in a proxy server of a distribution server, operates in case a JOIN message is received.
Fig. 19

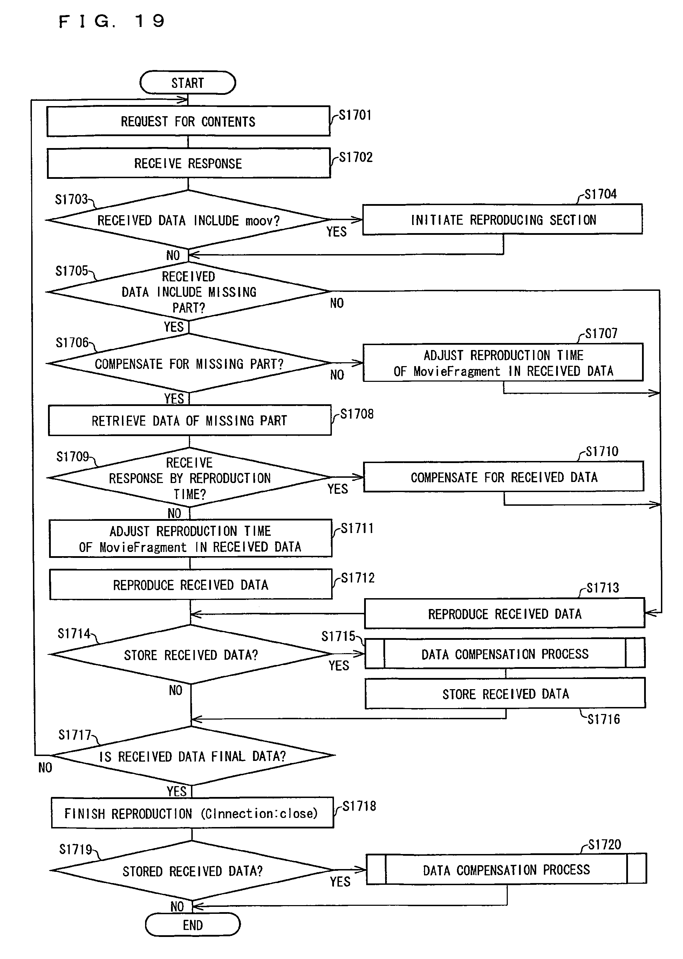

   Fig. 19 is a flowchart illustrating how a client device operates in the distribution system illustrated in Fig. 1.
Fig. 20

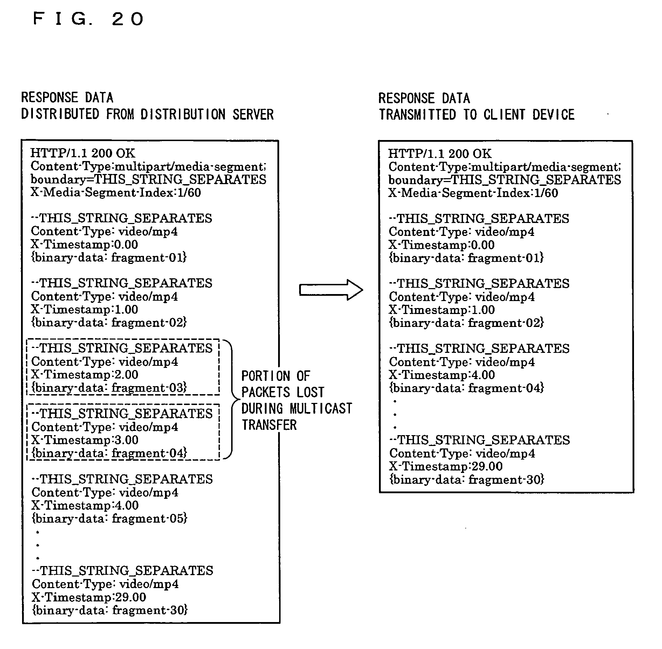

   Fig. 20 is a view illustrating an example of an HTTP response message which is transmitted, in the distribution system of Fig. 1, to a client device in a case where a multicast packet is lost during multicast communication.
Fig. 21

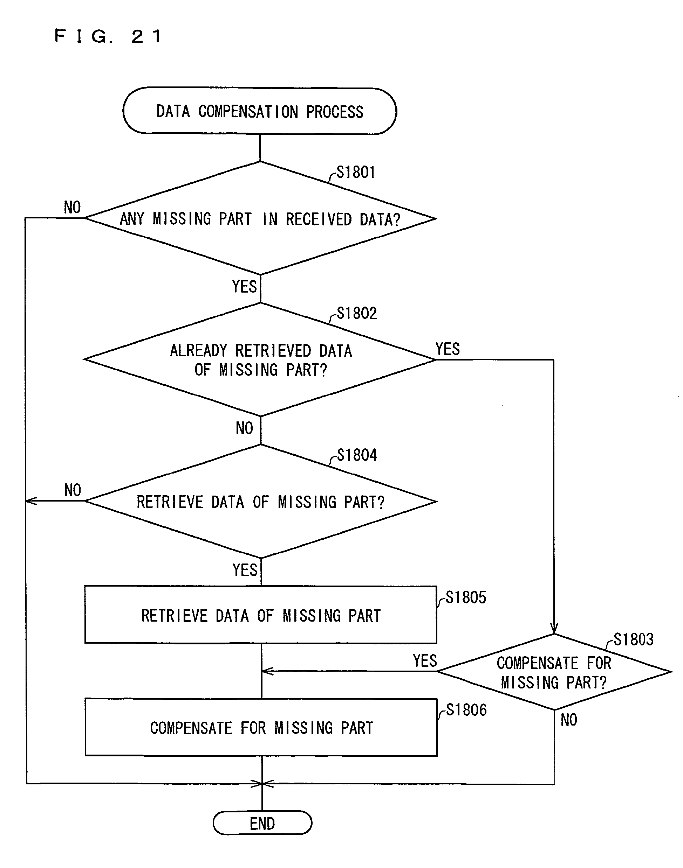

   Fig. 21 is a flowchart illustrating a compensation process which is carried out in the distribution system of Fig. 1 in a case where a client device concurrently records a content which is being reproduced. In the compensation process, a missing movie fragment is compensated with another movie fragment which corresponds to the missing part and has been obtained via HTTP communication.
Fig. 22

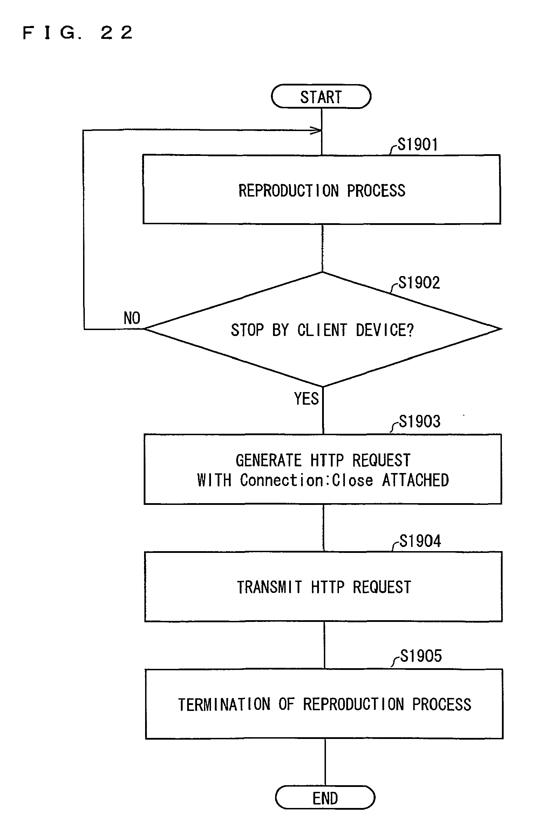

   Fig. 22 is a flowchart illustrating how a client device operates, in the distribution system of Fig. 1, when the client device receives a user's instruction on stopping reproduction of a video content.
Fig. 23
   Fig. 23 is a view illustrating a conventional distribution system in which a plurality of client devices separately receive respective pieces of data of a video content from a distribution server.
Fig. 24

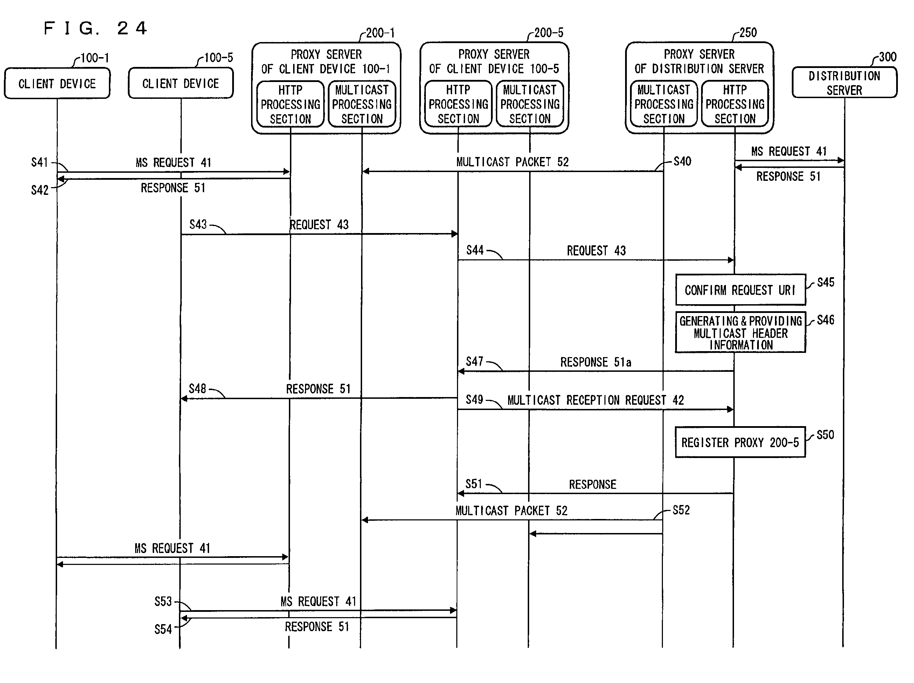

   Fig. 24 is a sequence diagram illustrating an example of operation which is carried out, in the distribution system of Fig. 1, in a case where a client device issues a new request for distributing a video content while multicast distribution is already being carried out.
Fig. 25

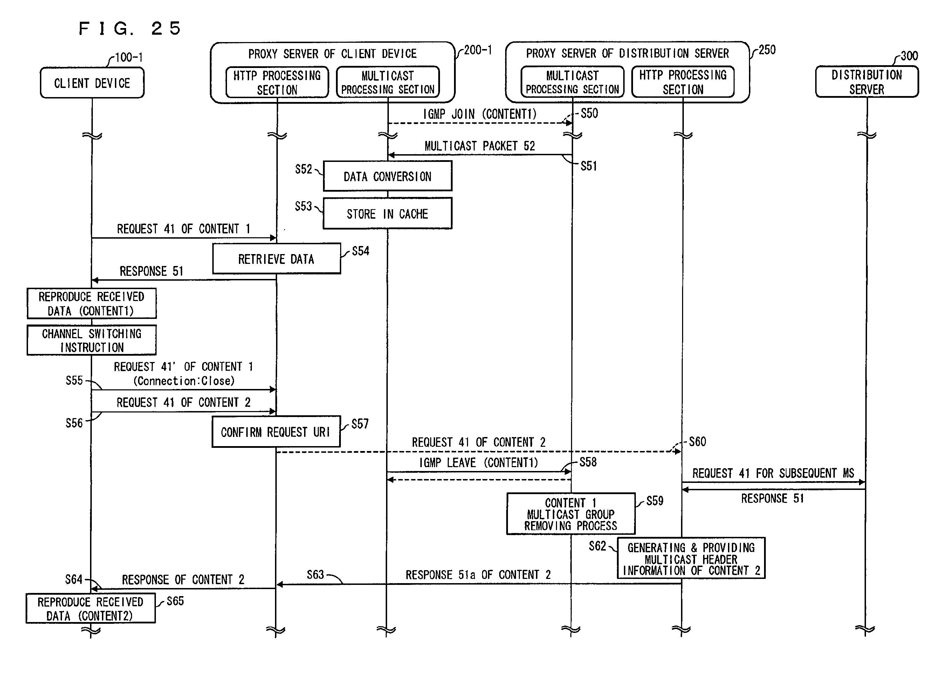

   Fig. 25 is a sequence diagram illustrating an example of operation which is carried out, in the distribution system of Fig. 1, in a case where a video content to be reproduced by a client device is changed.

### Description of Embodiments

### (Embodiment 1)

The following description will discuss a distribution system in accordance with an embodiment of the present invention, with reference to drawings.

Fig. 1 is a view illustrating an overall configuration of a distribution system 1 in accordance with the present embodiment. The distribution system 1 includes (i) N client devices 100 (100-1, 100-2, ..., 100-N), (ii) proxy servers 200 (200-1, 200-2, ..., 200-N) which are proxies provided for the respective client devices 100, (iii) a distribution server 300, and (iv) a proxy server 250 provided for the distribution server 300.

According to the distribution system 1, the proxy server 250 and the distribution server 300 constitute a distribution-side network (LAN), and the client devices 100-1 through 100-N and the proxy servers 200-1 through 200-N constitute a reproduction-side network (LAN) (see Fig. 1). The two LANs are separated by a main network 500, which is connected with the proxy servers 200-1 through 200-N and 250.

Note that, it is assumed in the present embodiment that the main network 500 (i) is provided between the proxy server 200 and the proxy server 250 and (ii) does not include a router.

According to the distribution system 1, the distribution server 300 can distribute video contents of a plurality of channels. In a case where the client device 100 accepts a channel selection instruction via a manipulation section (not illustrated), the distribution server 300 distributes a video content (hereinafter, also referred to as "target video content") of the selected channel. A distribution request from the client device 100 and a video content distributed from the distribution server 300 are first transmitted to corresponding proxy servers, respectively.

Fig. 2 is a view schematically illustrating how communication processes are carried out among devices in the distribution system 1, while a video content is being distributed from the distribution server 300 to the client devices 100-1 through 100-N. In Fig. 2, (i) each of rightward narrow arrows indicates a request for a video content, which request is transmitted based on HTTP (i.e., unicast communication), and (ii) each of leftward narrow arrows indicates a response to a request, which response is transmitted based on HTTP. Moreover, in Fig. 2, thick arrows indicate transmissions of a video content, which transmissions are carried out via multicast communication.

As illustrated in Fig. 2, in each of the LANs in the distribution system 1, the video content is transmitted by employing a request-response system that utilizes HTTP (Hypertext Transfer Protocol), which is one of data transmission protocols. In this case, the video content is transmitted and received in MIME multipart format (hereinafter, simply referred to as "multipart format") defined by HTTP.

Further, according to the distribution system 1, the video content is distributed over the main network via multicast communication (see Fig. 2). By the use of the multicast communication, data (a packet of the video content) can be distributed to a plurality of proxy servers 200, which belong to a destination multicast group, by performing transmission of the data from the proxy server 250 only once.

The following description will discuss detailed configurations of the client device 100, the proxy server 200, the proxy server 250, and the distribution server 300, with reference to Fig. 3.

### (Client device 100)

The client device 100 includes an HTTP processing section 101 and a reproducing section 102.

The HTTP processing section 101 transmits, to the proxy server 200, a distribution request (request message) for a video content in units of media segments (which is (i) obtained by dividing the video content for each predetermined time period; (ii) also shortly referred to as "MS" in each of the drawings; and (iii) later described in detail).

The HTTP processing section 101 receives, from the proxy server 200, the video content in the units of media segments, as a response message in the multipart format, which response message has parts that correspond to movie fragments (fragment). Note that details of the movie fragment will be described later.

The reproducing section 102 reproduces the video content by reading out the media segments, which have been received by the HTTP processing section 101.

### (Proxy server 200)

The proxy server 200 includes an HTTP processing section 201, a cache section 202, and a multicast processing section 203.

The HTTP processing section 201 transfers, to the proxy server 250, a distribution request, which has been received from the client device 100 and whose transmission source is the proxy server 200. Further, from the cache section 202, the HTTP processing section 201 reads out data for which the distribution request has been issued. Then the HTTP processing section 201 transmits the data to the client device 100.

The cache section 202 is a cache memory for holding data. The multicast processing section 203 makes a request to the proxy server 250 for joining a multicast group or for leaving the multicast group. Moreover, the multicast processing section 203 (i) receives data transmitted via multicast communication and (ii) converts the data into data in a format of an HTTP response message.

### (Proxy server 250)

The proxy server 250 includes an HTTP processing section 251, a cache section 252, a multicast processing section 253, and a multicast group information storage section 254.

The HTTP processing section 251 relays a distribution request, which has been received from the proxy server 200, to the distribution server 300. In a case where a target video content is being distributed to a predetermined number or more of communication devices, the HTTP processing section 251 (i) adds header information, which indicates that the target video content can be distributed via multicast communication, to a response message of the target video content, which response message has been transmitted from the distribution server 300, and then (ii) transmits the response message, which thus contains the header information, to the proxy server 200.

In a case where a proxy server 200 exists which belongs to a multicast group (hereinafter, also referred to as "target multicast group") to which the target video content is to be distributed via multicast communication (that is, in a case where there exists a proxy server 200 to which the target video content is to be distributed via multicast communication), the HTTP processing section 251 sequentially receives, from the distribution server 300, response messages of media segments of the target video content. As to the reception of the response messages, the proxy server 250 itself is set as a request source. Then, the HTTP processing section 251 caches the response messages in the cache section 252.

The cache section 252 is a cache memory for holding data. The cache section 252 holds a response message transmitted from the distribution server 300.

When the multicast processing section 253 accepts a request for joining the target multicast group from a proxy server 200-i ("i" is any number between 1 to N), the multicast processing section 253 causes the multicast group information storage section 254 to store an address of the proxy server 200-i therein, thereby recording that the proxy server 200-i is a member of the target multicast group. When the multicast processing section 253 accepts a request for leaving the target multicast group from the proxy server 200-i, the multicast processing section 253 deletes, from the multicast group information storage section 254, the address of the proxy server 200-i recorded as a member of the target multicast group.

In a case where there exists the proxy server 200 to which the target video content is to be distributed via multicast communication, the multicast processing section 253 sequentially (i) converts HTTP response messages, which are stored in the cache section 252, into packets in a format distributable via the multicast distribution (note that details will be described later with reference to Figs. 10 and 11) and (ii) distributes the packets to the proxy server 200 to which the target video content is to be distributed via multicast communication.

The multicast group information storage section 254 is a nonvolatile memory. The multicast group information storage section 254 stores addresses of respective destination communication devices, which belong to each of a plurality of multicast groups that are set for respective video contents.

### (Distribution server 300)

The distribution server 300 includes an HTTP processing section 301 and a memory section 302.

The HTTP processing section 301 (i) reads out media segments of a video content for which a distribution request has been issued and then (ii) transmits, to the proxy server 250, the media segments as response messages in the multipart format, in which each part of the multipart format includes a corresponding movie fragment.

The memory section 302 stores video contents of a plurality of channels.

The detailed configurations of the client device 100, the proxy servers 200 and 250, and the distribution server 300 have been thus described. Before describing how the distribution system 1 operates, the following description will discuss the movie fragments and the media segments, with reference to Figs. 4 and 5.

### (Regarding media segments and movie fragments)

The following description will first discuss the movie fragments with reference to Fig. 4.

Fig. 4 is a view schematically illustrating a relation between a bit stream (Contents.mp4) of a video content and movie fragments which store respective divided parts of the bit stream. Fig. 5 is a view schematically illustrating a relation between a media segment and movie fragments constituting the media segment.

As shown in Fig. 4, the bit stream is divided into parts and the parts are stored in the respective plurality of movie fragments. In Fig. 4, "mdat" indicates each of divided pieces of bit stream data. Each of the movie fragments corresponds to a unit part obtained by dividing the bit stream for each predetermined time period. In the present embodiment, each of the movie fragments is assumed to be in a fragment video format which is defined by the ISO Media File Format.

A headmost movie fragment (i.e., fragment 1) of the bit stream, which is an MP4 file, contains a moov header 41b. The moov header 41 b contains meta-information (such as initialization information) which relates to the entire bit stream and is utilized to reproduce a video. Each of subsequent movie fragments (i.e., fragments 2, 3, ...) of the bit stream contains a moof header 42b. The moof header 42b of each of the movie fragments is a header of meta-information for reproducing a video corresponding to the movie fragment.

Each of the movie fragments contains media data (i.e., data of the video itself) mdat in addition to the header. The media data mdat of each of the movie fragments contains partial data for a period corresponding to the movie fragment. In a case where, for example, each of the fragments is data obtained by dividing the bit stream for each one second, media data mdat of the fragment 1 contains video data for one second from the beginning of the video content.

The following description will discuss the media segment with reference to Fig. 5.

As shown in Fig. 5, the media segment is made up of a plurality of movie fragments. The media segment also corresponds to a unit part obtained by dividing content data for each predetermined time period. In the present embodiment, the media segment is regarded as content data contained in a single piece of response data. That is, the media segment is a unit of content data obtained in response to a single request.

As is clear from the configuration in which the media segment is made up of the plurality of movie fragments, a length of a time period corresponding to a single media segment is an integral multiple of a length of a time period corresponding to a single movie fragment (note, however, that this applies only to a case where a length of the movie fragment is fixed, and, in a case where the length of the movie fragment is variable, the time period corresponding to a single media segment is not limited to an integral multiple of the length of the single movie fragment). Note that the following operation example is described on the assumption that the time period corresponding to a single media segment is 30 seconds, and the time period corresponding to a single movie fragment is 1 second.

### (Operation example 1 of distribution system 1)

The following description will discuss, with reference to Figs. 6 through 12, a concrete example of an operation carried out in the distribution system 1 from when the client device 100 issues a request for distributing a target video content to when the distribution of the target video content to the client device 100 is completed.

Figs 6 and 7 are sequence diagrams that illustrate a first half of the operation and a second half of the operation, respectively.

In the present operation example, the HTTP processing section 251 of the proxy server 250 adds header information, which indicates that the target video content can be distributed via multicast communication, provided that the target video content is being distributed to four or more devices. Moreover, it is assumed that (i) the target video content is already being distributed to three client devices (i.e., the client devices 100-2 through 100-4) before the following operation starts and (ii) the client device 100-1 newly issues a distribution request for the target video content.

First, the client device 100-1 transmits, to the proxy server 200-1, a request 41 (first request), which is in an HTTP format, for requesting a headmost media segment of the target video content (S01). The request 41 is data as illustrated in (a) of Fig. 8. As is clear from (a) of Fig. 8, the client device 100-1 is connected with the proxy server 200-1 by a keep-alive connection. That is, the client device 100-1 is configured to keep the connection even after receiving a response to the request 41.

Then, the HTTP processing section 201 of the proxy server 200-1 transmits, to the proxy server 250, the request 41, which has been received from the client device 100-1, and in which an IP address of the proxy server 200-1 is set as a transmission source (S02). Then, the HTTP processing section 251 of the proxy server 250 is connected to the distribution server 300 by a keep-alive connection, and relays the request 41 to the distribution server 300 (S03).

Upon receipt of the request 41, the HTTP processing section 301 of the distribution server 300 (i) reads out the target video content from the memory section 302, (ii) generates a response message 51 as illustrated in (b) of Fig. 8, and (iii) transmits the response message 51 to the proxy server 250 (S04).

In (b) of Fig. 8, "www.sample.com" in the response message 51 indicates a host domain name of the distribution server 300, and "content1" indicates a file name of the target video content. Moreover, "X-Segment-Fragment-Index:1/60" indicates an index value of a media segment. Specifically, "X-Segment-Fragment-Index:1/60" indicates that (i) the target video content includes 60 media segments and (ii) the response message is data of an initial media segment.

Furthermore, "{binary-data:fragment-01}" through "{binary-data:fragment-30}" indicate respective 30 movie fragments constituting the initial media segment.

Upon receipt of the response message 51, the HTTP processing section 251 of the proxy server 250 confirms a frequency of request for the target video content, which request is transmitted from the client device 100 (S05). Specifically, the HTTP processing section 251 counts how many requests 41 for the same target video content have been received during a predetermined time period. In this case, the number of the client devices 100 is four (i.e., the client devices 100-1 through 100-4) and the frequency of request exceeds a predetermined frequency. Therefore, a response message 51 a as illustrated in (a) of Fig. 9 is generated by adding header information, which indicates that the target video content can be distributed via multicast communication, to the response message 51 (S06).

In (a) of Fig. 9, a text string surrounded by a dotted frame (i.e., a text string starting from "X-alternative-cast") indicates added header information.

The header information starting from "X-alternative-cast" is described in the following form:
<distribution format>: // <distribution
address>/<TTL>?session_id=<session ID>?session_name=<session name>

In this form, <distribution format> indicates how to distribute a content. In (a) of Fig. 9, <distribution format> is "multicast" that indicates the multicast distribution. In a case where the distribution format is the multicast distribution, <distribution address> indicates a multicast address (in (a) of Fig. 9, "224.1.1.1"). The multicast address is generally an IP multicast group address in class D.

<TTL> indicates a period of validity (time to live) of a packet. This defines a communication range in a network. In a case where a network includes a router provided between the proxy server 200 and the proxy server 250, it is necessary to set <TTL> to be a large value in order to distribute multicast data over the router. On the other hand, the present embodiment employs no router in the main network 500, and therefore a value of <TTL> is "1". <session ID> and <session name> are used to identify a session.

After the process of S06, the HTTP processing section 251 transmits the response message 51a to the proxy server 200-1 (S07).

Upon receipt of the response message 51a, the HTTP processing section 201 of the proxy server 200-1 confirms that the header information starting from "X-alternative-cast" is contained in the response message 51a (S08). Then, the HTTP processing section 201 (i) notifies the multicast processing section 203 of the existence of the header information, (ii) converts the response message 51a back into the response message 51, and (iii) transmits the response message 51 to the client device 100-1 (S09). Note that the reproducing section 102 of the client device 100-1, which has received the response message 51, starts reproducing the target video content.

Subsequently, the HTTP processing section 201 of the proxy server 200-1 transmits, to the proxy server 250, a multicast reception request (i.e., a JOIN message 42 for requesting to join the target multicast group) as shown in (b) of Fig. 9 (S10). The JOIN message 42 (second request) and a LEAVE message 43 (later described) are HTTP messages in a GET request format, as illustrated in (b) and (c) of Fig. 9. The JOIN message 42 has a header part containing an X-alternative-multicast-set header to which a text string indicative of joining the multicast group is given. The LEAVE message 43 has a header part containing an X-alternative-multicast-set header to which a text string indicative of leaving the multicast group is given. Specifically, a text string "JOIN" is given to the JOIN message 42, and a text string "LEAVE" is given to the LEAVE message 43.

Upon receipt of the JOIN message 42, the HTTP processing section 251 of the proxy server 250 (i) transmits a response message and (ii) causes an address of the proxy server 200-1 to be stored in the multicast group information storage section 254 so as to cause the proxy server 200-1 to join the target multicast group (S11).

Meanwhile, the HTTP processing section 251, which has received the JOIN message in S10, (i) obtains a media segment of the target video content (S12) and then (ii) causes the cache section 252 to store the media segment therein (S13). Subsequently, the processes of S12 and S 13 are repeatedly carried out. Specifically, the processes of S12 and S13 are carried out for each of all the media segments constituting the target video content. Note that a cycle in which the process of S12 is repeated is not limited in particular. That is, the process of S12 may be repeated in a cycle shorter than a time period during which a single media segment is reproduced by the client device 100.

After the process of S11 is ended, the multicast processing section 253 sequentially converts response messages 51 of media segments, which response messages 51 are stored in the cache section 252, into packets to be transmitted by the multicast communication (S14).

The following description will discuss details of the process of S 14, with reference to Figs. 10 and 11.

First, the following describes a format of a multicast packet, with reference to Fig. 10.

The multicast packet has a UDP header part, an RTP header part, and an RTP data part (see (c) of Fig. 10). The following describes a further concrete configuration of the multicast packet, with reference to (a) and (b) of Fig. 10.
(a) of Fig. 10 shows a format of a UDP packet constituting the multicast packet. The UDP packet has a UDP header part that has fields for (i) a port number of a transmission source of the multicast packet, (ii) a port number of a transmission destination of the multicast packet, (iii) a packet length of the UDP packet, and (iv) a checksum for maintaining consistency of the packet. The UDP packet further has a data part whose length is variable.
(b) of Fig. 10 shows a format of an RTP packet constituting the data (datagram) part of the UDP packet. The RTP packet has an RTP data part (payload data) in which a part of the response message 51 is stored.

Further, the RTP packet has an RTP header part that contains (i) a sequence number indicative of a transmission order of the multicast packet and (ii) a time stamp. The time stamp of the RTP packet stores a smallest time stamp value (X-timestamp) of the response message 51 which is partially contained in the RTP data part of the RTP packet. For example, in a case where the RTP data part contains a part of a response message 51 corresponding to the second media segment, a value "30" is stored in the time stamp of the RTP header part.

Next, the following description will concretely discuss, with reference to Fig. 11, how the multicast processing section 253 converts a response message 51, which is in the HTTP format, into a multicast packet.

A left part of Fig. 11 schematically shows multicast packets 52-1, 52-2, 52-3, ..., which have been converted. A right part of Fig. 11 schematically shows how data of a header part and pieces of data of a body part of each response message 51 (51-1, 51-2, ...) are stored, as payload data, in multicast packets.

The multicast processing section 253 (i) reads out the response message 51-1 of a media segment from the cache section 252, (ii) extracts a "file name of the target video content" and an "index value of the media segment" (i.e., "/content1/ 1") from a text string of a Content-Location header in the response message 51, and (iii) causes the extracted part to be stored, as payload data, in an initial multicast packet 52-1.

Then, the multicast processing section 253 causes a header part of the response message 51-1 to be stored, as payload data, in a next multicast packet 52-2.

Further, the multicast processing section 253 causes pieces of data in a body part of the response message 51-1 to be stored, as payload data, in the multicast packet 52-3 and the subsequent multicast packets 52. Specifically, the multicast processing section 253 causes a movie fragment contained in each part of the response message 51 to be stored in one or plural multicast packets 52 depending on how large a data size of the movie fragment is. The multicast processing section 253 carries out similar processes on the response messages 51-2 and the subsequent response messages 51.

Note that binary data of the movie fragment contained in each of the parts is stored in the multicast packet 52 such that a headmost part of the binary data is surely identical with a headmost part of a payload of the multicast packet 52. Similarly, the binary data is stored in the multicast packet 52 such that an endmost part of the binary data is surely identical with an endmost part of the payload of the multicast packet 52. In other words, a single multicast packet is configured not to store plural pieces of binary data of a plurality of movie fragments.

The multicast processing section 253 (i) gives appropriate values to respective of the UDP header part, the RTP header part, and the RTP data part in the header part of the multicast packet, and (ii) gives an IP multicast address (multicast group address) "224.1.1.1" to an IP header part of the header part of the multicast packet.

The multicast processing section 253 sequentially transmits the multicast packets 52, which have been thus converted, to the proxy server 200-1 (S15).

The multicast processing section 203 of the proxy server 200-1 (i) converts the plurality of multicast packets 52, which have been transmitted in S 15, into one (1) response message 51 of the media segment (S16) and (ii) caches the one (1) response message 51 in the cache section 202 (S17). Subsequently, the processes of S15 through S17 are repeatedly carried out. Specifically, the processes of S12 and S 13 are carried out for each of all the media segments constituting the target video content.

Meanwhile, the client device 100-1 then transmits, to the proxy server 200-1, a request 41, which is in the HTTP format, for requesting the second media segment of the target video content (S18).

The proxy server 200-1, which received the request 41, causes the HTTP processing section 201 thereof to read out a response message 51 of the second media segment from the cache section 202 (S19). Note that, in a case where the response message 51 is not cached in the cache section 202 at a time point when the reading out is carried out, the HTTP processing section 201 waits until the response message 51 is cached and then reads out the response message 51.

After reading out the response message 51, the HTTP processing section 201 transmits the response message 51 to the client device 100-1. The processes of S18 and S19 are also sequentially carried out on the third and subsequent media segments.

The following description will discuss operations that are carried out after the distribution server 300 receives, from the proxy server 250, a request 41 for requesting a final media segment.

The HTTP processing section 301 of the distribution server 300 (i) prepares a response message 51' by adding a header "Connection:Close" to a header part of a normal response message 51 and (ii) transmits, to the proxy server 250, the response message 51' as a response message of the last media segment (S20).

When the HTTP processing section 251 confirms that the text string "Connection:Close" is contained in the header part of the response message 51', the HTTP processing section 251 recognizes that the connection with the distribution server 300 is closed (S21).

Then, the multicast processing section 253 (i) converts the response message 51', which is cached in the cache section 252, into a multicast packet 52 and (ii) transmits the multicast packet 52 to the proxy server 200-1 (S22).

The multicast processing section 203 of the proxy server 200-1 (i) converts the plurality of multicast packets 52, which have been transmitted in S22, into one (1) response message 51' of the media segment and (ii) caches the one (1) response message 51' in the cache section 202. Note that the multicast processing section 203 confirms that the header "Connection:Close" is contained in a header part of the cached response message 51'.

When the proxy server 200-1 receives, from the client device 100-1, a request 41 for requesting a subsequent media segment, the HTTP processing section 201 of the proxy server 200-1 reads out a response message 51' of the media segment from the cache section 202.

In a case where the HTTP processing section 201 confirms that the header "Connection:Close" is contained in a header part of the response message 51' thus read out (S23), the HTTP processing section 201 (i) transmits the response message 51' to the client device 100-1 and then (ii) closes the connection with the client device 100-1 (S24). This causes the client device 100-1 to recognize that the connection with the proxy server 200 is closed. Accordingly, the reproduction of the target video content is to be finished when the reproducing section 102 finishes to reproduce the media segment (i.e., the last media segment of the target video content) of the response message 51'.

When the multicast processing section 203 confirms that the header "Connection:Close" is contained in the header part of the response message 51', the multicast processing section 203 notifies the HTTP processing section 201 of the existence of the header "Connection:Close", and then the HTTP processing section 201 transmits, to the proxy server 250, a multicast reception end notification (which is a LEAVE message for requesting to leave the target multicast group) 43 as shown in (c) of Fig. 9.

The proxy server 250, which received the LEAVE message 43, causes the HTTP processing section 251 thereof to transmit a response and confirm that the received message is the LEAVE message 43 (S26).

Then, the HTTP processing section 251 deletes, from the multicast group information storage section 254, an address of the proxy server 200-1 which address is stored to indicate that the proxy server 200-1 belongs to the target multicast group (S27). This causes the proxy server 200-1 to leave the multicast group to which the target video content is to be distributed by the multicast communication.

Note that the processes of S22 and the subsequent steps are similarly carried out on the client devices 100-2 through 100-4 and the proxy servers 200-2 through 200-4. That is, the client devices 100-2 through 100-4 also finishes reproduction of the target video content, and the proxy servers 200-2 through 200-4 are caused to leave the multicast group to which the target video content is to be distributed by the multicast communication.

All the devices belonging to the target multicast group thus leave the target multicast group, and therefore the address "224.1.1.1", which has been used as a multicast group address of the target multicast group, can be used in multicast distribution of another video content.

The operation example of the distribution system 1 has been thus described with reference to the sequence diagrams of Figs. 6 and 7.

According to the step S23, the HTTP processing section 201 and the multicast processing section 203 confirm that the header "Connection:Close" is contained in the header part of the response message 51'. Note, however, that, instead of such a configuration, it is possible to employ a configuration in which the HTTP processing section 201 and the multicast processing section 203 confirm, with reference to the X-Media-Segment-index header in the header part, whether or not an index value ("1" in (b) of Fig. 8) of a media segment is identical with a value ("60" in (b) of Fig. 8) indicative of the number of media segments constituting the target video content. In this case, if the index value is identical with the value indicative of the number of media segments, the HTTP processing section 201 may notify the multicast processing section 203 of the agreement of the values so as to cause the multicast processing section 203 to transmit a LEAVE message.

### (Operation of distribution system 1 when client device stops reproducing video content)

The following description will discuss how the distribution system 1 operates when the client device 100-1 stops reproducing the target video content, with reference to Fig. 13. In the description below, it is assumed that the target video content is distributed from the distribution server 300 only to the client device 100-1.

Fig. 13 is a sequence diagram illustrating a flow of processes which are carried out by the devices in a case where the client device 100-1 receives a user's instruction to stop reproduction of the video content.

As shown in Fig. 13, when the client device 100-1 receives an instruction to stop reproduction via a manipulation section (not illustrated), the reproducing section 102 of the client device 100-1 stops reproducing the target video content. Moreover, the HTTP processing section 101 transmits, to the proxy server 200-1, a request 41' that has been obtained by adding a header "Connection:Close" to a header part of a request 41, which is in the HTTP format, for requesting a next media segment (S28).

The proxy server 200-1, which received the request 41', causes the HTTP processing section 201 thereof to confirm that the header part of the request 41' contains the header "Connection:Close" (S29). Then, the HTTP processing section 201 (i) reads out a response message 51 of the requested media segment from the cache section 202, (ii) transmits the response message 51 to the client device 100-1, and (iii) closes the connection with the client device 100-1.

The HTTP processing section 201, which has confirmed that the header "Connection:Close" is contained, notifies the multicast processing section 203 of the existence of the header "Connection:Close" (S30). In addition, the HTTP processing section 201 transmits, to the proxy server 250, a LEAVE message 43 as shown in (c) of Fig. 9 for requesting to leave the target multicast group (S31).

The proxy server 250, which received the LEAVE message 43, causes the HTTP processing section 251 thereof to (i) transmit a response to the proxy server 200 and (ii) confirm that the received message is the LEAVE message 43 (S32).

Then, the HTTP processing section 251 deletes, from the multicast group information storage section 254, an address of the proxy server 200-1 which address is stored to indicate that the proxy server 200-1 belongs to the target multicast group (S33) . This causes the proxy server 200-1 to leave the multicast group to which the target video content is to be distributed via multicast communication.

Once there exists no device belonging to the target multicast group, the multicast processing section 253 notifies the HTTP processing section 251 of the fact that no device belongs to the target multicast group. Then, the HTTP processing section 251 adds the header "Connection:Close" to a header part of an HTTP message, and transmits the HTTP message to the distribution server 300 (S34). This causes the connection between the distribution server 300 and the proxy server 250 to be closed.

The flow of processes carried out in the entire distribution system 1 has been thus described as an operation example. The following description will discuss how each of devices constituting the distribution system 1 operates, with reference to Figs. 14 through 22.

### [Operation of proxy server 200]

First, the following description will discuss how the proxy server 200 provided for the client device 100 operates. In the descriptions below, the HTTP processing section 201 and the multicast processing section 203 are discussed separately.

### (Operation of HTTP processing section 201)

The following description will discuss how the HTTP processing section 201 operates, with reference to Fig. 14. Fig. 14 is a flowchart illustrating how the HTTP processing section 201 operates.

As shown in Fig. 14, the HTTP processing section 201 receives a request 41 for a media segment from the client device 100 (S1101).

Then, the HTTP processing section 201 judges whether or not any data is cached in the cache section 202 (S1102).

In a case where the HTTP processing section 201 determines that some sort of data is cached in the cache section 202 (YES in S 1 102), the HTTP processing section 201 reads out a request URI (i.e., "/content 1/ 1" in the example of (a) of Fig. 8) from the request 41 received in S1101 (S1107). Then, the HTTP processing section 201 reads out, from the cache section 202, a response message corresponding to the request URI (S1108) (in the example of (a) of Fig. 8, a response message corresponding to "/content1/1" is a response message of a headmost media segment, having a file name "content1", of the target video content). The process then proceeds to S 1 109.

On the other hand, in a case where the HTTP processing section 201 determines that no data is cached in the cache section 202 (NO in S 1102), the HTTP processing section 201 transmits the request 41 to the proxy server 250 (S1103), and then receives a corresponding response message from the proxy server 250 (S1104).

The HTTP processing section 201 judges whether or not the received response message contains header information (X-alternative-cast header) indicating that the proxy server 250 can transmit the content by the multicast communication (S1105). In a case where the HTTP processing section 201 determines that the header information (X-alternative-cast header) is not contained in the received response message (NO in S1105), the process proceeds to S 1109. Whereas, in a case where the HTTP processing section 201 determines that the header information (X-alternative-cast header) is contained in the received response message (YES in S 1105), the process proceeds to S 1106.

In S1106, the HTTP processing section 201 issues an instruction for carrying out multicast reception (i.e., notification of a multicast address for reception), and then the HTTP processing section 201 transmits a JOIN message to the proxy server 250 (S1118). The process then proceeds to S1110.

In S1109, the HTTP processing section 201 generates a response message to be transmitted to the client device 100. The process then proceeds to S1110.

In S1110, the HTTP processing section 201 judges whether or not the request 41, which has been received in S1101, contains a communication end notification ("Connection:Close" header). In a case where the HTTP processing section 201 determines that the communication end notification is contained (YES in S1110), the HTTP processing section 201 notifies the multicast processing section 203 of the end of the multicast reception (S1111), and the process then proceeds to S1112. Whereas, in a case where the HTTP processing section 201 determines that the communication end notification is not contained (NO in S1110), the process proceeds to S1112.

In S 1112, the HTTP processing section 201 judges whether or not the response received in S1104 contains the communication end notification (i.e., "Connection:Close" header). In a case where the HTTP processing section 201 judges that the communication end notification is contained (YES in S 1112), the process proceeds to S1119. In S1119, the HTTP processing section 201 transmits a LEAVE message 43 to the proxy server 250, and the process then proceeds to S1115.

On the other hand, in a case where the HTTP processing section 201 determines that the communication end notification is not contained (NO in S1110), the process proceeds to S1113. In S1113, the HTTP processing section 201 judges whether or not the response received in S1104 is a response of the final media segment (S113). Specifically, the HTTP processing section 201 judges whether or not an index value of the media segment is identical to a value indicative of the number of media segments constituting the target video content, with reference to the X-Media-Segment-index header in the header part.

In a case where the HTTP processing section 201 determines that the response is of the final media segment (YES in S1113), the process proceeds to S1115. Whereas, in a case where the HTTP processing section 201 determines that the response is not of the last media segment (NO in S1113), the HTTP processing section 201 transmits the response message, which has been generated in S 1109, to the client device 100 without making any change to the response message (S1114). Then, the process returns to S 1 101.

In S1115, the HTTP processing section 201 adds a communication end notification to the response message generated in S1109 (S1115). Then, the HTTP processing section 201 (i) transmits, to the client device 100, the response message containing the communication end notification (S1116), (ii) closes the connection with the client device 100 (S1117), and (iii) terminates the process.

### (Operation of multicast processing section 203)

The following description will discuss how the multicast processing section 203 operates, with reference to Fig. 15. Note that the following describes an operation which is started in a case where the HTTP processing section 201 has carried out the process of S1106.

Fig. 15 is a flowchart illustrating how the multicast processing section 203 operates. First, the multicast processing section 203 receives, from the HTTP processing section 201, a notification that indicates a start of a multicast reception (S1201).

Then, the multicast processing section 203 carries out initialization for receiving multicast data. Specifically, the multicast processing section 203 obtains a multicast group address from the HTTP processing section 201 for receiving multicast distribution (i.e., for responding to a query which is periodically transmitted from the proxy server 250) (S1202).

Subsequently, the multicast processing section 203 sequentially receives multicast packets (S1203), and then converts the plurality of packets, which have been received in S1205, into a response message of a media segment, which response message is in the HTTP format (S1204).

Then, the multicast processing section 203 (i) caches the converted response message in the cache section 202 (S1205) and (ii) refers to an X-Media-Segment-index header contained in a header part of the response message (S1206). Specifically, the multicast processing section 203 judges whether or not an index value of the media segment is identical to a value indicative of the number of media segments constituting the target video content.

In a case where not all pieces of data of the target video content have been received by the multicast processing section 203 (NO in S1207), that is, in a case where the index value of the media segment is not identical with the value indicative of the number of media segments constituting the target video content, the process returns to S1203.

On the other hand, in a case where the multicast processing section 203 has received all the pieces of data of the target video content (YES in S1207), the process proceeds to S1208.

In S1208, the multicast processing section 203 (i) notifies the HTTP processing section 201 of the completion of the multicast reception and (ii) finishes the process.

### [Operation of proxy server 250]

The following description will discuss how the proxy server 250 for the distribution server 300 operates. In the descriptions below, the HTTP processing section 251 and the multicast processing section 253 are discussed separately.

### (Operation of HTTP processing section 251)

The following description will discuss how the HTTP processing section 251 operates, with reference to Figs. 16 and 18.

The HTTP processing section 251 receives, from the proxy server 200, a request for a media segment of the target video content (S1301).

Then, the HTTP processing section 251 transmits the received request to the distribution server 300 (S1302) and then receives, from the distribution server 300, a response to the request (S1303).

The HTTP processing section 251 judges whether or not the target video content is already being distributed via multicast communication (S1304). Specifically, the HTTP processing section 251 judges whether or not any proxy server 200 belongs to the target multicast group, with reference to the multicast group information storage section 254.

In a case where the HTTP processing section 251 determines that the target video content is being distributed by the multicast communication (YES in S1304), the process proceeds to S1306. On the other hand, in a case where the HTTP processing section 251 determines that the target video content is not being distributed by the multicast communication (NO in S1304), the process proceeds to S1305.

In S1305, the HTTP processing section 251 confirms a frequency of request for the target video content, which request is transmitted from the client device 100. This process of S1305 is identical with the process of S05 in Fig. 6. Specifically, the HTTP processing section 251 counts how many requests 41 for the same target video content are received during a predetermined time period. Here, the HTTP processing section 251 is configured to count, as requests for the same target video content, requests 41 that have URIs containing the same content file name, e.g., "content1". For example, in a case where the HTTP processing section 251 receives a request 41 containing "content1/2" and a request 41 containing "content1/3", these requests 41 are counted as requests for the same target video content.

In a case where the number of requests for the same target video content, which requests have been received during the predetermined time period, is equal to or larger than a predetermined number of times (YES in S1305), the process proceeds to S 1306. Whereas, in a case where the number of the requests received during the predetermined time period is smaller than the predetermined number of times (NO in S1305), the process proceeds to S 1307.

In S 1306, the HTTP processing section 251 (i) generates an X-alternative-cast header which sets <distribution mode> as the multicast distribution and (ii) adds the X-alternative-cast header to a header part of the response message which has been transmitted from the distribution server 300 in S1304. In a case where the target video content is already being distributed by the multicast communication, a multicast group address used in the distribution of the target video content is given to <distribution address> in the X-alternative-cast header. Whereas, in a case where the target video content is not being distributed by the multicast communication, the HTTP processing section 251 uses, as <distribution address>, any unused multicast group address in class D.

In S1307, the HTTP processing section 251 transmits the response message to the proxy server 200, and the process then proceeds to S 1308.

In a case where the HTTP processing section 251 receives a JOIN message from the proxy server 200 (YES in S1308), the HTTP processing section 251 judges whether or not the target video content is already being distributed by the multicast communication (S1309). In a case where the HTTP processing section 251 determines that the target video content is already being distributed by the multicast communication (YES in S 1309), the process proceeds to S1311. Alternatively, in a case where the HTTP processing section 251 has not received a JOIN message from the proxy server 200 during a predetermined time period (NO in S 1308), the process also proceeds to S1311.

On the other hand, in a case where the HTTP processing section 251 determines that the target video content is already being distributed by the multicast communication (YES in S 1309), the HTTP processing section 251 establishes a connection with the distribution server 300 by a keep-alive connection, and starts a process (later detailed with reference to Fig. 18) for obtaining, as response messages, the target video content from the distribution server 300 (S1310).

In S 1310, the HTTP processing section 251 judges whether or not a "Connection:Close" header is contained in a header part of the response message obtained from the distribution server 300 (S1311).

In a case where the HTTP processing section 251 determines that the "Connection:Close" header is contained (YES in S1311), the HTTP processing section 251 waits for reception of a LEAVE message from the proxy server 200 (S1312). After the reception of the LEAVE message, the HTTP processing section 251 terminates the process.

On the other hand, in a case where the HTTP processing section 251 determines that the "Connection:Close" header is not contained (NO in S1311), the process proceeds to S 1313. The HTTP processing section 251 judges whether or not an end of the multicast distribution has been notified by the multicast processing section (S1313). In a case where the HTTP processing section 251 determines that the end of the multicast distribution has not been notified (NO in S1313), the HTTP processing section 251 merely terminates the process.

Whereas, in a case where the HTTP processing section 251 determines that the end of the multicast distribution has been notified (YES in S 1313), the HTTP processing section 251 closes the connection with the distribution server (S1314) and then terminates the process.

The following description will discuss how the target video content is obtained, as response messages, from the distribution server 300, with reference to Fig. 18.

First, based on a response message received from the distribution server 300 immediately before, the HTTP processing section 251 generates a URI of a request to be next transmitted to the distribution server 300 (S1501). For example, in a case where the response message received from the distribution server 300 immediately before contains a Content-Location header whose endmost part is "/content1/1", the HTTP processing section 251 generates "/content1/2" as the URI of the request.

Subsequently, the HTTP processing section 251 transmits the request to the distribution server 300 (S1502), and then receives a response from the distribution server 300 (S1503).

The HTTP processing section 251 then caches the response, which has been received from the distribution server 300, in the cache section 252 in such a way that the response is associated with URI information of the request which has been transmitted in S1502 (S1504).

Lastly, the HTTP processing section 251 judges whether or not all response messages of the target video content (i.e., a content whose file name is "content1") have been received (S1505). In a case where the HTTP processing section 251 determines that there remains a response message which has not been received yet (NO in S1505), the process returns to S1501. Whereas, in a case where the HTTP processing section 251 determines that all the response messages have been received (YES in S1505), the HTTP processing section 251 terminates the process.

### (Operation of multicast processing section 253)

The following description will discuss how the multicast processing section 253 operates, with reference to Fig. 17. Note that the operation described here is an operation which is started when the HTTP processing section 251 has received a JOIN message in S1308.

First, the multicast processing section 253 receives the JOIN message from the HTTP processing section 251 (S1401).

Then, the multicast processing section 253 (i) identifies a target multicast group based on a file name of a target video content, which file name is contained in the JOIN message, and (ii) registers, with the target multicast group, an address of the proxy server 200 which has transmitted the JOIN message (S1402).

Then, the multicast processing section 253 (i) reads out a response message from the cache section 252 (S1403) and (ii) converts the response message into a plurality of multicast packets (S1404).

The multicast processing section 253 then transmits the plurality of multicast packets, which have been obtained by the conversion, to the proxy server 200 (S1405).

Subsequently, the multicast processing section 253 judges whether or not a LEAVE message has been received from the HTTP processing section 251 (S1406). In a case where the multicast processing section 253 determines that the LEAVE message has not been received from the HTTP processing section 251 (NO in S1406), the process returns to S1403.

Whereas, in a case where the multicast processing section 253 determines that the LEAVE message has been received (YES in S 1406), the multicast processing section 253 deletes, from the target multicast group, the address of the proxy server 200 which has transmitted the LEAVE message (S1407), and the process proceeds to S1408.

In S 1408, the multicast processing section 253 judges whether or not any other proxy server 200 exists, which belongs to the target multicast group. In a case where the multicast processing section 253 determines that there exists such a proxy server 200 (YES in S1408), the process returns to S1403.

Whereas, in a case where the multicast processing section 253 determines that there exists no proxy server 200 belonging to the target multicast group (NO in S 1408), the multicast processing section 253 notifies the HTTP processing section 251 of an end (multicast distribution end) of the multicast distribution of the target video content (S1409), and the multicast processing section 253 terminates the process.

### [Operation of client device 100]

### (Operation 1 of client device 100)

The following description will describe how the client device 100 is operated, from when the client device 100 receives user's instruction to reproduce the target video content to when the entire target video content is completely reproduced, with reference to Figs. 19 to 21.

An HTTP processing section 101 of the client device 100 transmits a request to the proxy server 200 for a media segment of the target video content (S1701), and receives a response from the proxy server 200 (S1702).

The HTTP processing section 101 determines whether or not the response message received in S1702 includes a moov header (S1703). When it is determined that the moov header is included (YES in S1703), the process proceeds to S1704, whereas when it is determined that no moov header is included (NO in S1703), the process proceeds to S1705.

In S1704, the reproducing section 102 carries out initiation processes necessary for reproducing the target video content, by referring to the moov header.

In S1705, it is determined whether or not there is a missing part (a missing movie fragment) in the media segment, by referring to a X-Timestamp value of the response message received in S 1702.

Below describes the missing movie fragment with reference to Fig. 20. The left side of Fig. 20 shows a response message transmitted from the distribution server 300 to the proxy server 250, and the right side of Fig. 20 shows a response message transmitted to the client device 100.

A plurality of multicast packets 52 converted from the response message shown in the left side of Fig. 20 are transmitted to the proxy server 200. At this time, there may be cases where a portion of the packets 52 is lost while the plurality of multicast packets pass through the main network 500. In the example of Fig. 20, packets 52 that configure movie fragment 03 and movie fragment 04 are lost. Accordingly, the response 51 received by the client device 100 results to be data in which the movie fragment 03 and the movie fragment 04 are lost.

The reason why the data becomes one in which the movie fragment 03 and the movie fragment 04 are lost is because the response 51 is a response message of a multipart form in which each part of the multipart form include a corresponding movie fragment. Moreover, since the two movie fragments (movie fragment 03 and movie fragment 04) are lost, a difference between timestamps of adjacent parts (X-Timestamp of movie fragment 02: 1.00 and X-Timestamp of movie fragment 05: 4.00), which timestamps are included in each of the parts, becomes 3 seconds, even though the movie fragments each are data of 1 second in the present embodiment. Thus, it is possible for the reproducing section 102 to detect that these movie fragments are lost.

When it is judged that the response message received includes no missing part in S1702 (NO in S1705), the process proceeds to S1713, whereas when it is judged that the response message has a missing part (YES in S1705), the process proceeds to S1706.

In S1706, the HTTP processing section 101 determines whether or not to compensate for the missing part. Namely, the HTTP processing section 101 determines whether or not to compensate for the missing part on the basis of a setting made by a user in advance through a manipulation section not illustrated (setting of whether to reproduce the media segment after compensating for the missing part or to reproduce the media segment without compensating for the missing part).

When it is determined to not compensate for the missing part (NO in S1706), the reproducing section 102 adjusts a reproducing time of Movie Fragment data included in the received media segment (S1707). In other words, the Movie Fragment data included in the media segment includes a description of a reproduction starting time of the Movie Fragment by X-Timestamp, and the client retrieves, by referring to the X-Timestamp, the Movie Fragment data of the time that should be reproduced, and reproduces the data. When a part is lost in the media segment, the reproduction of the Movie Fragment seems as though it is to stop since no Movie Fragment exists for the time that the Movie Fragment should be reproduced. Hence, the value of X-Timestamp is adjusted so that the Movie Fragment is in a continuous state (in terms of time). For example, the X-Timestamp of movie fragment 05 is retrieved as 2.00 so that the movie fragment 05 continues from movie fragment 02. Subsequent movie fragments are also adjusted so as to be in a continuous state. Moreover, the X-Timestamp value may be adjusted during reproduction. For example, if the missing movie fragment is a movie fragment that should be reproduced from t seconds to t + 1 seconds of the target video content, the reproducing section 102 controls so that the movie fragment one prior to the missing movie fragment is reproduced for 2 seconds, from t - 1 seconds to t + 1 seconds (for example, so that (a) a one prior movie fragment is reproduced at half speed or (b) the one prior movie fragment is reproduced normally for one second and a last frame (still image) in the movie fragment is reproduced for a subsequent one second). An example of this control is a process in which the reproducing section 102 records information on a moof header of the one prior movie fragment to reproduce the movie fragment for two seconds. After the process of S1707, the process proceeds to S 1713.

On the other hand, when the HTTP processing section 101 determines to compensate for the missing part (NO in S1706), the HTTP processing section 101 transmits a request to the proxy server 200 to retrieve the movie fragment of the missing part (S1708), and proceeds to S1709. The request to retrieve the missing movie fragment may be a request for a media segment including the missing movie fragment, or may be a request to retrieve just the missing movie fragment.

URI of the request to retrieve just a missing movie fragment is, for example, as follows: / <file name of subject video contents> / <index number of media segment> / <value indicative of what number in sequence of the movie fragments in the media segment the missing movie fragment is included in>. For example, when the X-timestamp of the missing movie fragment is 45, the request URI is / content1/2/ 16.

When the time becomes the time that the reproduction of the media segment received in S1702 is to be started, the reproducing section 102 determines whether or not the HTTP processing section 101 has already retrieved the movie fragment of the missing part that corresponds to the request of S 1708. When it is judged as retrieved (YES in S1709), the reproducing section 102 compensates for the missing movie fragment with the newly retrieved movie fragment (replaces the missing movie fragment with the new movie fragment) (S1710). After the process of S1710, the process proceeds to S1713.

On the other hand, when it is determined as not yet retrieved (YES in S1709), the reproducing section 102 adjusts the reproducing time of the Movie Fragment data in the received media segment (S1711). The process of S1711 is a process similar to the process of S 1707.

Thereafter, the reproducing section 102 sequentially reproduces the movie fragments in the media segment received in S1702 (S1712). After the process of S 1712, the process proceeds to S1714.

In S 1713, the reproducing section 102 sequentially reproduces the movie fragments in the media segments received in S1702 (or upon compensation in S1710). Thereafter, the process proceeds to S1714.

In S1714, the reproducing section 102 determines whether or not to store the reproduced media segment in a storage section not illustrated. Namely, the reproducing section 102 determines that the media segment is to be stored in a case where the reproducing section 102 received user's instruction through the manipulation section to record the target video content, and determines that the media segment is not to be stored in a case where no instructions to record the target video content is received.

When it is determined that the reproduced media segment is to be stored (YES in S1714), the reproduced media segment is stored in the storage section (S1716) after a data compensation process (later described) is carried out in S1715. After the process of S1716, the process proceeds to S1717. On the other hand, when it is determined that the media segment is not to be stored (NO in S1714), the process proceeds to S1717.

In S1717, the reproducing section 102 determines whether or not the media segment reproduced in S1713 is a final media segment of the target video content. When it is determined as not the final media segment (NO is S1717), the process returns to S1701. Alternatively, when it is judged that the media segment reproduced in S1713 is the final media segment (YES in S 1717), the process proceeds to S 1718.

In S1718, the HTTP processing section 101 closes the connection with the proxy server 200 and terminates the reproducing of the target video content. The process then proceeds to S1719.

In S1719, the reproducing section 102 determines whether or not the media segments of the target video content are recorded. When it is determined that the media segments are recorded (YES in S1719), a data compensation process of S1720 is carried out, and thereafter the process is terminated. When it is determined as not recorded (NO in S 1719), the process is merely terminated.

### (Data compensation process)

The following describes a series of processes of the data compensation process carried out in S1715 and S1720, with reference to Fig. 21. Fig. 21 is a flowchart illustrating a series of processes of the data compensation process carried out in the client device 100.

As shown in Fig. 21, the reproducing section 102 of the client device 100 determines whether or not the media segment reproduced in S1713 has any missing part (S1801). When it is determined that the media segment has a missing part (S1801), the reproducing section 102 determines whether or not the HTTP processing section 101 has already received a movie fragment of the missing part, which missing part corresponds to a request already sent in S 1708 to retrieve the movie fragment of the missing part (S1802). When it is determined that the movie fragment of the missing part is already retrieved (YES in S 1802), the process proceeds to S1803, whereas when it is determined that the movie fragment of the missing part is not retrieved yet (NO in S1802), the process proceeds to S 1804.

In S 1803, the HTTP processing section 101 determines whether or not to compensate for the missing part. Namely, the HTTP processing section 101 determines whether or not to compensate for the missing part on the basis of a setting made by the user in advance through a manipulation section not illustrated (a setting of whether to compensate for the missing data after completely reproducing the entire target video content or to compensate for the missing data during the reproduction of the target video contents).

When it is determined to compensate for the missing part (YES in S1803), the process proceeds to S1806. On the other hand, when it is determined to not compensate for the missing part (NO in S1803), the data compensation process is terminated.

In S 1804, the HTTP processing section 101 determines whether or not to retrieve the movie fragment of the missing part. At this time, the HTTP processing section 101 determines that the movie fragment of the missing part is to be retrieved in a case in which the HTTP processing section 101 has been instructed to reproduce the media segment without compensating for the missing part, and determines that the movie fragment of the missing part is not to be retrieved in a case in which the HTTP processing section 101 has been instructed to reproduce the media segment after compensating for the missing part.

When it is determined to retrieve the movie fragment of the missing part (YES in S 1804), the HTTP processing section 101 retrieves the movie fragment of the missing part from the proxy server 200 (S1805), and proceeds to S1806. On the other hand, when it is determined to not retrieve the movie fragment of the missing part (NO in S 1804), the data compensation process is terminated.

In S 1806, the reproducing section 102 compensates for the missing movie fragment with a new movie fragment retrieved in S 1708 or S 1806, and terminates the data compensation process.

The above described the operations carried out by the client device 100. As clear from the above description, when the received media segment includes a missing part, the client device 100 retrieves a movie fragment of the missing part from the proxy server 200. In a case in which the client device 100 retrieves the movie fragment of the missing part before the client device 100 reproduces the media segment including the missing part, the client device 100 can reproduce the media segment in a state in which the missing part is compensated for. Moreover, in a case in which the movie fragment of the missing part is retrieved after the client device 100 reproduces the media segment including the missing part, by storing the media segment in a state in which the missing part is compensated for, the target video contents can be stored in a complete state.

### (Operation 2 of client device 100)

The following description will describe how the client device 100 is operated when the client device 100 receives a user's instruction to stop the reproduction of the target video contents while the target video contents is being reproduced, with reference to Fig. 22.

While the target video contents is being reproduced (S1901), the reproducing section 102 of the client device 100 determines, as required, whether or not a reproduction stopping instruction from the user is received (S1902).

When it is determined that a reproduction stopping instruction is received (in S1902), the HTTP processing section 101 then generates a request whose header section includes a "Connection:Close" header, as a request to be transmitted to the proxy server 200 (S1903).

Thereafter, the HTTP processing section 101 transmits the request generated in S1903 to the proxy server 200 (S1904).

When the HTTP processing section 101 receives a response corresponding to the request transmitted in S1904, the reproduction of the target video contents is terminated (stopped) at a time in which the media segment of that response finishes its reproduction (S1905).

### (Operation example 2 of distribution system 1)

Next describes another concrete example of how the distribution system 1 is operated when the client device 100 makes a distribution request for the target video content (see Fig. 24).

In this operation example, assume that four client devices 100 (client devices 100-1 to 100-4) are already receiving the target video content from the distribution server 300 via multicast distribution, and a new client device 100-5 makes a distribution request for the target video content.

Moreover, in this operation example, a live video inputted to the distribution server 300 from a live camera (not illustrated) is distributed live to the client devices 100 as the target video content. Furthermore, the live video inputted to the distribution server 300 is distributed live after the video is recorded in a memory section 302. Hence, the client device 100 can receive a VOD distribution of the target video content from the distribution server 300 after the live distribution is terminated.

Fig. 24 is a sequence diagram of the operation example of the distribution system 1. Note that in Fig. 24, the operations of the client devices 100-2 to 100-4 and the operations of the proxy servers 200-2 to 200-4 have been omitted in description.

The multicast processing section 253 of the proxy server 250 transmits multicast packets 52 of the target video content to the proxy server 200 (S40).

Next, the client device 100-1 transmits to the proxy server 200 a request 41 for a media segment of the target video content (S41). The HTTP processing section 201 of the proxy server 200 then generates a response 51 of the media segment using the multicast packets 52 received in S40, and transmits the response 51 to the client device 100-1 (S42).

Next, the client device 100-5 transmits to the proxy server 200-5. a request 43 for the target video content (S43). In the embodiment, the request 43 is a request used for requesting transmission of an entirety of the target video content. Namely, the request 43 is different from the request 41 that is used for requesting the transmission of a designated media segment in the target video contents.

The HTTP processing section 201 of the proxy server 200-5 that receives the request 43 relays the request 43 to the proxy server 250 (S44).

The HTTP processing section 251 of the proxy server 250 which has received the request 43 confirms the URI ("/content1") of the request (S45). Namely, the HTTP processing section 251 determines whether or not the target video content (content whose file name is "content1") is already distributed via multicast (i.e., whether or not the communication device belonging to the target multicast group is already present). In the embodiment, the proxy servers 200-1 to 200-4 belong to the target multicast group, so hence it is determined as already being distributed via multicast.

The HTTP processing section 251 determining that the target video content is already distributed via multicast, generates an X-alternative-cast header. Thereafter, the HTTP processing section 251 adds the X-alternative cast header which sets <distribution address> as the target multicast group to a response message 51 of a latest media segment (a media segment whose index value is t) that has been cached to a cache section 252.

Thereafter, the HTTP processing section 251 transmits a response message 51' including the X-alternative-cast header to the proxy server 200-5 (S47).

The HTTP processing section 201 of the proxy server 200-5 converts the response message 51' to a response message 51 and transmits the response message 51 to the client device 100-5 (S48). The reproducing section 102 of the client device 100-5 reproduces the response message of the latest media segment (media segment whose index value is t) received by the HTTP processing section 101. As a result, the client device 100-5 starts reproducing the live video.

Meanwhile, the HTTP processing section 201 of the proxy server 200-5 transmits a multicast reception request (JOIN message) 42 to the proxy server 250 (S49).

When the HTTP processing section 251 of the proxy server 250 receives the JOIN message 42, the HTTP processing section 251 transmits a response in response to the JOIN message 42, to the proxy server 200-5 (S50). Furthermore, the HTTP processing section 251 records an address of the proxy server 200-5 as an address belonging to the target multicast group, in a multicast group information storage section 254 (S51).

Thereafter, the multicast processing section 253 transmits, to the proxy servers 200-1 to 200-5, the multicast packets 52 of the media segments whose index values are t + 1 or more (S52).

Meanwhile, in S48, the HTTP processing section 101 of the client device 100-5 that receives the response message 51 of the media segment whose index value is t transmits a request 41 to request for a subsequent media segment (whose index value is t + 1) (S53), and receives a response 51 (media segment whose index value is t + 1) corresponding to the request 41 (S54).

Thereafter, as to the subsequent media segments (index values of t + 2, t + 3, ...), the client device 100-5 repeats the processes of S53 and S54.

As clear from the description of operation example 2 provided above, when multicast distribution of the target video content is carried out by the proxy server 250, the distribution request for the target video content from the client device 100 is made to not reach the distribution server 300.

Therefore, even if the number of the client devices 100 to which the target video content is distributed from the distribution server 300 increases, processing load on the distribution server 300 and load on the network between the distribution server 300 and the proxy server 250 are held down. This thus allows for efficiently distributing the target video content to the client devices 100 from the distribution server 300.

Moreover, as described above, the client devices 100 can record the target video content while reproducing the target video contents, in response to instructions from a user. In the foregoing operation example 2, in a case in which the client device 100-5 is set so as to record the target video content, the client device 100-5 is to store the media segments whose index value is t or more, of the target video content.

Hence, as to the target video content that is distributed via VOD after the live distribution is finished, the client device 100-5 can efficiently record the entire live distributed target video content by (i) transmitting requests 41 for media segments whose index values are prior to t, (ii) retrieving responses 51 of a number of t - 1, and (iii) storing these responses 51.

### (Advantages of proxy server 250)

As described above, in the proxy server 250 of the distribution system 1, when the HTTP processing section 251 detects that the request 41 requesting for the target video content is transmitted from the proxy server 200, the HTTP processing section 251 transmits, to the proxy server 200, X-alternative-cast information indicating that the proxy server 250 is capable of transmitting the target video content via multicast communication in replacement of the distribution server 300. Moreover, the multicast processing section 253 registers the proxy server 200 in a target multicast group in a case in which the JOIN message 42 is received from the proxy server 200. Thereafter, the multicast processing section 253 relays via multicast communication the target video content in the cache section 252 to the proxy servers 200 registered in the target multicast group.

Namely, when there are three client devices 100 to which the target video content is distributed (when a frequency that the distribution request is received is less than a certain frequency), media segments of identical contents are distributed to the client devices by having the distribution server 300 receive a distribution request three times and return a corresponding media segment response every time (see Fig. 12(a)). On the other hand, when the number of the client devices 100 to which the target video content is distributed is of a predetermined number (4 devices) (the frequency that the distribution requests is received is of a certain frequency or more), thereafter, as to the media segments of identical contents, the distribution server 300 can carry out the response returning process of the media segment in response to receiving the distribution request collectively, just once (see Fig. 12(b)). As a result, it is possible to hold down the processing load on the distribution server 300 and the load on the network between the distribution server 300 and the proxy server 250.

Moreover, when there are three of the client devices 100 to which the target video contents is distributed (the frequency that the distribution request is received is less than a certain frequency), media segments of identical contents are distributed to the client devices 100 by having the proxy server 250 also receive the distribution request three times and return a corresponding response of the media segment every time (see Fig. 12(a)). However, as shown in Fig. 12(b), when the number of the client devices 100 to which the target video content is distributed is of a certain number (4) (the frequency that the distribution request is not less than a certain frequency), the proxy server 250 can distribute the media segment via multicast distribution. Namely, the amount of data that the proxy server 250 transmits to distribute the media segments of identical contents to four client devices 100 is the amount of data for one media segment. Hence, it is possible to hold down the load on the main network, particularly on the band of the zone that is near the proxy server 250.

Furthermore, as described above, the media segment is distributed from the distribution server 300 to the proxy server 250 in MIME multipart form whose parts are movie fragments. Meanwhile, the proxy server 250 stores all or a portion of one part (movie fragment) into one multicast packet, and distributes that multicast packet via multicast distribution. Hence, even if one multicast packet is lost while transmitting a plurality of multicast packets, the missing part only affects one movie fragment. Accordingly, it is possible to make the client device 100 reproduce video contents in a stable manner.

### (Embodiment 2)

In the present embodiment, the proxy server 200 transmits an IGMP JOIN message and a LEAVE message, to join a multicast group and to leave the multicast group, respectively.

IGMP is a protocol utilized in IP broadcasting (IP multicast). IGMP is utilized when a multimedia router performs routing of multicast data.

In general, a multimedia router is configured to recognize on the basis of IGMP whether or not host devices joining a multicast group is present. The multimedia router transmits multicast data to the host devices in the multicast group. Hence, in order for a host device to receive certain multicast data, the host device requires to transmit to the multimedia router an IGMP JOIN message requesting to join the multicast group to which that multicast data is distributed.

Moreover, the host device requires to respond (transmit an IGMP REPORT) to a query (IGMP QUERY) transmitted from the multimedia router every certain period, in order to continuously receive the multicast data. Furthermore, in order not to receive such multicast data, the host device needs to send an IGMP LEAVE message requesting that the host device leave the multicast group to which the multicast data is transmitted.

Hence, the multimedia router requires to carry out various processes, such as a process to make a host device join a multicast group, a query transmission process, and a process to make a host device leave a multicast group.

Among these processes, the process of making the host device leave from the multicast group is a process that takes time. This is because after the multimedia router receives the IGMP LEAVE message, the transmission of the multicast data is stopped after confirmation by query of whether or not any other host devices that should receive the multicast data are present.

As a result, even after the host device transmits the IGMP LEAVE message, the multimedia data is transmitted to the host device for a while.

Hence, if channels are zapped while the host device is receiving multicast distribution of certain video contents, not only the multicast data of the video contents of the switched channel but also the multicast data of the video contents of the previous channel will also be transmitted to the host device for a while. Namely, with multicast distribution, a certain bandwidth is generally compensated. This hence causes a problem that the network band is unnecessarily strained by the channel zapping.

In order to avoid the problem of the straining of the network band, the host device may be made to join the multicast group to which the video contents of the switched channel is transmitted, after the multicast data of the video contents of the previous channel is no longer transmitted to the host device. However in this case, another problem arises, which problem is that a time lag occurs from when the reproduction of the video content of the previous channel is stopped to when the reproduction of the video content of the next channel is started.

Described below is an example of an operation of the distribution system 1 in accordance with the present embodiment, with reference to Fig. 25. In the present embodiment, it is assumed that a user instructs to change channels while reproducing, with the client device 100-1, a video content whose file name is "content1" (also called "prior video contents"), to a video content whose file name is "content 2" (also called "latter video contents"). Moreover, it is assumed that the proxy server 250 is already distributing the latter video contents to another client device 100 before the instruction to change channels is made.

Fig. 25 is a sequence diagram of the operation example. As shown in Embodiment 1, the proxy server 200 that receives a request 41 for the prior video contents from the client device 100-1 receives a response 51a from the proxy server 250, and then transmits to the proxy server 200 the IGMP JOIN message requesting to join the multicast group (called "prior multicast group") to which the prior video contents is distributed via multicast distribution (S50).

The multicast processing section 253 that receives the IGMP JOIN message starts to transmit the multicast packets 52 of the prior video contents to the proxy server 200 (S51). Thereafter, the response 51 of the prior video contents is distributed from the proxy server 200-1 to the client device 100-1 as with Embodiment 1 (by repeating the processes of the following S51 to S54).

Namely, the multicast processing section 203 of the proxy server 200-1 collects the plurality of multicast packets 52 distributed in S51 and converts these to a response 51 of a media segment (S52), and caches the response 51 in the cache section 202 (S53) .

Meanwhile, after the client device 100-1 transmits to the proxy server 200-1 a request 41 that requests for a media segment of the prior video contents, the HTTP processing section 201 retrieves a corresponding response 51 from the cache section 202 (S54), and transmits the response 51 to the client device 100-1.

Note that it is assumed that the client device 100-1 receives the instruction from the user to change channels through a manipulation section, while the processes of S51 to S54 are repeated (i.e., while the prior video contents is reproduced on the client device 100-1).

The HTTP processing section 101 of the client device 100-1 that received the instruction to change channels transmits a request 41' for the prior video contents (i.e., a request to which the "Connection:Close" header is added) to the proxy server 200 (S55).

At the same time, the HTTP processing section 101 transmits a request 41 for the latter video contents to the proxy server 200 (S56).

When the HTTP processing section 201 of the proxy server 200-1 newly receives the request 41 for the latter video contents in S56, the HTTP processing section 201 determines whether or not a request 41' for the prior video contents has been received. In the embodiment, the request 41' is received in S55, so it is determined that the request URI has been changed (S57). Since it is determined that the request URI is changed, the HTTP processing section 201 relays the request 41 to the proxy server 250 (S60).

Meanwhile, since the HTTP processing section 201 has received the request 41' in S56, the multicast processing section 203 transmits to the proxy server 250 an IGMP LEAVE message that requests to leave from the prior multicast group (S58).

The multicast processing section 253 of the proxy server 250 starts the process of removing the proxy server 200-1 from the prior multicast group (S59). As described above, since this process takes a certain amount of time, the multicast packets 52 of the prior video contents are transmitted to the proxy server 200-1. In this case, the proxy server 200-1 deletes the multicast packets 52.

Meanwhile, the HTTP processing section 251 of the proxy server 250 that receives the request 41 relays the request 41 to the distribution server 300 (S61).

The latter video contents is already distributed via multicast distribution. Hence, when the HTTP processing section 251 receives from the distribution server 300 the response 51 corresponding to the request 41, the HTTP processing section 251 provides the X-alternative-cast header to the response message 51 (S62), and generates the response 51'. Note that the X-alternative-cast header includes an address of the latter multicast group as a <distribution address>.

Thereafter, the HTTP processing section 251 transmits the response 51' of the latter video contents to the proxy server 200-1 (S63).

The HTTP processing section 201 of the proxy server 200-1 that receives the response 51' transmits a response 51 of the latter video contents to the client device 100-1 (S64). At this point in time, the client device 100-1 starts reproducing the latter video contents.

Thereafter, the multicast processing section 203 transmits to the proxy server 250 the IGMP JOIN message requesting to join the latter multicast group. This causes the multicast packets 52 of the latter video contents to be distributed to the proxy server 200. In this case, the multicast processing section 203 preferably transmits the IGMP JOIN message requesting to join the latter multicast group to the proxy server 250 at a timing in which the multicast processing section 203 determines that the IGMP JOIN message is to be transmitted. More specifically, it is preferable that the multicast processing section 203 determine that the IGMP JOIN message is to be transmitted in a case in which a certain amount of time has elapsed after receiving and deleting the multicast packets 52 of the prior video contents, and determine that the IGMP JOIN message is not to be transmitted in a case in which the certain amount of time has not elapsed.

Note that when the HTTP processing section 201 receives the request 41 for the latter video contents (second contents) in S56, the HTTP processing section 201 can transmit to the client device 100-1 the response 51 of the prior video contents (first contents) to be transmitted to the client device 100-1, which response 51 has the "Connection: Close" header provided thereto. In this case, the connection between the client device 100-1 and the proxy server 200 that relays the prior video contents become closed at a timing immediately after transmitting the response.

As described above, in the distribution system 1 of the present embodiment, the client device 100 can immediately start reproducing the latter video contents by transmitting to the proxy server 200 the request 41' for the prior video contents (HTTP request including "Connection:Close" header) and the request 41 for the latter video contents at the time when the channels are switched. Furthermore, the network band between the client device 100 and the proxy server 200 will not be strained during the switching of the channels.

Accordingly, the client device 100 of the distribution system 1 brings about an effect of achieving both of promptly reproducing the latter video contents and holding down load on the network band on the client device 100, as compared to a conventional client device that receives video contents via multicast communication (i.e., that transmits to the multimedia router the IGMP LEAVE message to request for leaving the prior multicast group, at the time of channel zapping).

Moreover, since it is possible to promptly reproduce the latter video contents, it is possible to allow the user to view the live video at a quick timing for example when the latter video contents is of a live video that is already distributed on live.

Furthermore, when the video contents is compression encoded for example by a compression method defined by H.264, the time that is required from when the channel is switched to when the latter video contents starts to be reproduced may further differ greatly between the client device 100 of the present embodiment and the conventional client device.

That is to say, in the case in which the video contents is compression encoded, the client device cannot make a user view the video until the encoded key frame data is obtained and decoded, for example. In IP multicast distribution, the multicast packets may be lost during the transmission. Namely, in the case in which the client device directly receives the multicast packets of the latter video contents as in the conventional case, the start of reproducing the latter video contents can become delayed due to the lack of a key frame caused by a lost multicast packet.

In comparison, as described above, the client device 100 of the present embodiment consistently carries out communication with the distribution server 300 via the highly reliable HTTP communication, from when the channel is switched to when the reproduction of the latter video contents is started. That is to say, no key frame will be lost during the processes of distributing the latter video contents from the distribution server 300 to the client device 100, until the start of reproduction of the latter video contents. Accordingly, the client device 100 of the present embodiment can start reproducing the latter video contents positively and promptly even in the case in which the latter video contents is compression encoded.

It is preferable to configure the distribution server 300 or the proxy server 250 so as to be capable of processing a X-Transport-Speed header. Moreover, it is preferable to configure the client device 100 so as to transmit to the proxy server 200 a HTTP request including the X-Transport-Speed header. The X-Transport-Speed header is a header for requesting the HTTP server to transmit data at a transmission rate in accordance with a value specified in the header.

In this case, the client device 100 can receive data of the latter video contents at high speed by setting the X-Transport-Speed header as a large value. Hence, the client device 100 can start reproducing the latter video contents more quickly even in the case in which the key frame is not included in a beginning part of the data of the latter video contents.

The present embodiment is described on the presumption that the proxy server 250 serves as a multimedia router (i.e., no multimedia router is present in the communications path between the proxy server 200 and the proxy server 250). However, the main network 500 is assumed to include a network in which a multimedia router is provided between the proxy server 200 and the proxy server 250. In this case, the proxy server 200 transmits notifications such as IGMP JOIN and IGMP LEAVE to a multimedia router closest to the proxy server 200 among the multimedia routers provided on the communications path with the proxy server 250.

### (Additional Matter 1)

Embodiments 1 and 2 were examples whose client device 100 transmits requests for the target video content in units of media segments. However, the client device 100 may transmit requests in units of the entire target video content. In this case, the proxy server 250 converts the requests received from the proxy server 200 to the requests in units of media segments.

For example, when the HTTP processing section 251 receives a request for the entire target video contents (a request message starting with "GET / content 1 / HTTP1.1"), the HTTP processing section 251 generates a request 41 starting with "GET /content1/1 HTTP/1.1" and transmits this to the distribution server 300, to receive a corresponding response.

Thereafter, the HTTP processing section 251 repeats the process of generating the request 41 that starts from "GET / content1 / t/ HTTP/ 1.1 " and transmits this to the distribution server 300, to receive its corresponding response. This process is repeated by incrementing the t of two or more, until the entire target video content is received.

### (Additional Matter 2)

In Embodiments 1 and 2, when the proxy server 250 receives the request 41 from the proxy server 200, the request 41 is to be relayed to the distribution server 300 if no multicast distribution is carried out. However, the proxy server 250 may operate as described below while no multicast distribution is carried out.

Namely, in a case in which a response 51 corresponding to the request 41 is cached in the cache section 252 when the request 41 is received from the proxy server 200, the proxy server 250 can transmit the cached response 51 (or the response 51' generated from the response 51) to the proxy server 200.

### (Additional Matter 3)

Embodiments 1 and 2 describes the IP addresses of the devices as addresses defined by IPv4, however it is not limited to this. Namely, the IP addresses of the devices may be addresses defined by IPv6. In this case, the proxy server 250 may carry out multicast distribution by a multicast distribution technique defined whose target is a network configured by IPv6.

### (Additional Matter 4)

In Embodiment 1, the client device 100 determines whether or not the received media segment has a missing part, and when it is determined that the received media segment has a missing part, the data of the missing part is retrieved (i.e., a distribution request for a movie fragment of the missing part (or a movie fragment including the missing part) is made). However this process can be carried out by the proxy server 200 of the client device 100. Moreover, the proxy server 200 may use, to retrieve the data of the missing part, a packet retransmission technique, FEC (Forward Error Correction), or like technique.

By configuring as such, when the proxy server 200 serves as a representative server of a plurality of client devices 100, it is possible to retrieve data of the missing part more efficiently than causing the client devices 100 to separately retrieve the data of the missing part.

### (Additional Matter 5)

In cases in which the network between the client device 100 and the proxy server 200 is interrupted or the like in Embodiments 1 and 2, there may be cases in which the video contents cannot be appropriately received for a certain amount of time caused by (i) the request 41 transmitted from the client device 100 being not delivered to the proxy server 200 for a while or (ii) the response 51 transmitted from the proxy server 200 being not delivered to the client device 100.

In such a case, the accumulated amount of the response 51 cached in the cache section 202 may exceed the storage capacity of the proxy server 200 during the certain period of time. This may cause the deletion of the multicast packets 52 to be distributed via multicast from the proxy server 250 thereafter.

However, even in such a case, when a request 41 requesting for a response 51 that is not cached in the cache section 202 is received from the client device 100 after the certain period of time, the proxy server 200 can retrieve the response 51 from the proxy server 250 by relaying the request 41. Moreover, the client device 100 can recognize which media segment could not be retrieved during the certain period of time. Hence, it is possible to again retrieve all media segments that could not be obtained during the certain period of time.

Note that when the video contents is provided as leveled contents (configured of a base layer and an enhancement layer(s)) (scalable contents) or as contents having various qualities (various different bit rates, resolutions or frame notes) (e.g., 13-segments and one-segment), the proxy server 200 may be operated as follows, in order to prevent the accumulated amount of the data cached in the cache section 202 from exceeding the storage capacity of the cache section 202.

Namely, when the multicast processing section 203 of the proxy server 200 determines that the amount of data cached in the cache section 202 exceeds a certain threshold, the multicast processing section 203 may (i) extract data of a portion of the levels among the leveled media segments configured by the multicast packets 52, (ii) convert the data to a response message and (iii) cache the response message in the cache section 202. For example, in a case in which the media segments configured by the multicast packets 52 are configured of a base layer and an enhancement layer(s), a response message that extracts just the base layer can be cached in the cache section 202.

Furthermore, when the multicast processing section 203 determines that the amount of data cached in the cache section 202 exceeds a certain threshold, the multicast processing section 203 may (i) extract just a portion of data that has a certain quality, among the media segments that are (a) configured of the multicast packets 52 and (b) including a plurality pieces of data of various qualities, (ii) convert the extracted data to a response message, and (iii) cache the response message in the cache section 202. For example, in a case in which the media segment configured by the multicast packets 52 is made of one-segment data and 13-segment data, a response message in which just the one-segment data is extracted can be cached in the cache section 202.

Note that in this case, the HTTP processing section 201 of the proxy server 200 can change the level (or quality) to be retrieved by the client device 100 by reading out the response 51 cached in the cache section 202 and adding, to the header part of the response 51 or to the parts of the multiparts, information indicative of the level, quality (bit rate) or the like that can be provided.

### (Program, Recording medium)

Blocks of the client devices 100, the proxy servers 200 and 250, and the distribution server 300 (300') may be realized by way of hardware by a logic circuit formed on an integrated circuit (IC chip) or by way of software as executed by a CPU (Central Processing Unit).

In the latter case, the client device 100, the proxy servers 200 and 250, and the distribution server 300 each include a CPU and memory devices. The CPU executes instructions in control programs realizing the functions. The memory devices include a ROM (Read Only Memory) which contains programs, a RAM (Random Access Memory) to which the programs are loaded, and a memory (recording medium) containing the programs and various data. The objective of the present invention can also be achieved by mounting to the client device 100, the proxy servers 200 and 250, and the distribution server 300, a computer-readable recording medium containing control program code (executable program, intermediate code program, or source program) for the client device 100, the proxy servers 200 and 250, and the distribution server 300, which is software realizing the aforementioned functions, in order for the computer (or CPU, MPU) to retrieve and execute the program code contained in the recording medium.

The recording medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; a semiconductor memory, such as a mask ROM/EPROM/EEPROM/flash ROM; or a logic circuit such as PLD (Programmable logic device) and FPGA (Field Programmable Gate Array).

Moreover, the program codes may be supplied to the client device 100, the proxy servers 200 and 250, and the distribution server 300 via a communications network. The communications network is not limited in any particular manner as long as it is capable of transferring a program code, and may be, for example, the Internet, an intranet, extranet, LAN, ISDN, VAN, CATV communications network, virtual dedicated network (Virtual Private Network), telephone line network, mobile communications network, or satellite communications network. The transfer medium which makes up the communications network is not limited in any particular manner, and may be, for example, wired line, such as IEEE 1394, USB, electric power line, cable TV line, telephone line, or ADSL (Asymmetric Digital Subscriber Line) line; or wireless, such as infrared radiation (IrDA, remote control), Bluetooth (Registered Trademark), IEEE 802.11 wireless, HDR (High Data Rate), NFC (Near Field Communication), DLNA (Digital Living Network Alliance), mobile telephone network, satellite line, or terrestrial digital network.

Note that the embodiments disclosed in the specification are merely exemplifications and should not be considered so as to serve as a limitation. The scope of the present invention is indicated by the claims and not the foregoing descriptions, and the scope of the present invention intends to include all equivalent aspects and all modifications within the scope of the present invention.

As described above, in the proxy server of the present invention, it is preferable that there are a plurality of the communication devices, the transmission device is configured to be capable of transmitting various contents in response to requests from the communication devices, and the transmission means transmitting the information to the communication devices only when the proxy server detects that the first request is received from at least a certain number of the communication devices in a certain period of time for a same content.

According to the configuration, if the proxy server of the present invention receives requests to transmit contents via unicast communication from a large number of communication devices in a short period of time for the same contents, the proxy server can relay that contents to the large number of communication devices via multicast communication. Meanwhile, when the proxy server receives a request to transmit the same contents via unicast communication only from a small number of communication devices, the proxy server relays the content via unicast communication to the small number of communication devices.

Hence, the proxy server brings about a further effect of maintaining a good balance between holding down the load on the network band by use of the multicast communication and the stable transfer by use of the unicast communication, in accordance with the load circumstances on the network band.

It is preferable that the transmission device is configured to successively transmit, in response to a request from the communication device, divided data obtained by dividing the content into a plurality of pieces, and the relay means sequentially relays, to the communication device, the divided data cached in the storage section.

This configuration brings about a further effect that the proxy server can carry out multicast communication more efficiently.

It is preferable that in the proxy server, the content is a video content, and the video content includes a plurality of movie fragments.

This configuration brings about a further effect that the proxy server can thoroughly control the reproduction of the video contents on the reproducing device that reproduces the contents.

It is preferable that in the proxy server, the video content transmitted from the transmission device is data of a multipart form, each part of the multipart form data including one of the movie fragments.

According to the configuration, in a case in which data of one (1) part is lost during the process of transferring the video contents from the proxy server, the movie fragment that cannot be received by the communication device is one (1).

Hence, the proxy server further brings about an effect that it is possible to make the communication device retrieve the missing data in a short period of time.

It is preferable that in the proxy server, each part of the multipart form data includes, in addition to the movie fragment, a value indicating which number in sequential order of the plurality of movie fragments, the movie fragment included in the respective part is to be reproduced by a reproducing device for reproducing the video content.

According to the configuration, the proxy server causes the communication device that receives the data of the multipart form to determine whether or not the value indicating which number in sequential order the respective movie fragment is to be reproduced is included in the received parts. This brings about a further effect that it is possible to easily acknowledge the missing movie fragment.

It is preferable that in the proxy server, the relay means is configured to relay the video content to be relayed to the communication device by transmitting to the communication device a plurality of packets via multicast communication, each of the plurality of packets including just data of a whole or a portion of one movie fragment.

According to the configuration, even in a case in which N packets among M packets transferred from the proxy server to the communication device via multicast communication is lost during transfer, the communication device can receive the movie fragments of the number of not less than M - N.

Hence, a further effect is brought about that even if a relative number of packets is lost during the transfer, the proxy server can make the communication device retrieve the missing data in a short period of time.

Note that the following proxy server is also included in the scope of the present invention: a proxy server serving as a communication device for the proxy server (sender proxy server), the proxy server serving as the communication device being configured to transmit the first request to the sender proxy server, the proxy server serving as the communication device including: relay means for relaying the content, in response to the first request, to a reproducing device for reproducing the content, the first request being received from the reproducing device; and first judging means for judging, when the proxy server receives the information as a result of relaying the first request received from the reproducing device, whether or not to transmit the second request to the sender proxy server.

According to the configuration, the proxy server receives contents from the transmitting proxy server via multicast communication only when the first judging means judges that the second request should be transmitted to the transmitting proxy server.

Hence, an effect is brought about that the proxy server can select as appropriate, in view of the circumstances, whether to hold down the load on the network band via multicast communication, or to secure stable transfer via unicast communication.

Moreover, it is preferable that the proxy server is configured such that the relay means maintains a connected state with the reproducing device during the relaying of the content to the reproducing device, the connected state being established for replaying the content to the reproducing device, and when the proxy server receives a first request for transmission of a second content while the relay means is relaying a first content to the reproducing device, the relay means closes a connected state with the reproducing device, which connected state has been established for relaying the first content.

According to the configuration, the proxy server can immediately terminate the process related to the first contents in a case in which the reproducing device switches the contents to be reproduced, from the first contents to the second contents.

Hence, a further effect is brought about that the proxy server can reduce the processing load caused by the switching of the contents in the reproducing device.

Moreover, it is preferable that the proxy server is configured further including: transmission means for transmitting, to the sender proxy server, in a case in which the proxy server receives a first request for transmission of the second contents while the relay means is replaying the first content to the reproducing device, a request for removing the proxy server from the multicast group that communication devices to which the first content is being relayed belong to; and second judging means for judging whether or not a certain period of time has elapsed after the first content is no longer transmitted to the proxy server, the first judging means judging that the second request should be transmitted to the sender proxy server if the second judging means judges that the certain amount of time has elapsed.

The configuration brings about a further effect that the proxy server is capable of holding down unnecessary load on the network band between proxy servers, which load is caused by the proxy server receiving from the transmitting proxy server both the first contents and the second contents via multicast communication, in a case in which the contents that the reproducing device reproduces switches from the first contents to the second contents.

Note that the present invention can be realized as a communications system including the proxy servers, the reproducing device, and the transmission device. Moreover, a relay control program for causing a computer to operate as each of means of a proxy server according to the present invention, and a computer-readable recording medium on which the relay control program is recorded, are also within the scope of the present invention.

### Industrial Applicability

A communications system according to the present invention is broadly applicable as a video distribution system.

### Reference Signs List

100 client device (reproducing device, communication device)
100-1, 100-2 client device
110 HTTP processing section
120 reproducing section
200 proxy server of client device (communication device)
200-1, 200-2 proxy server of client device
201 HTTP processing section (relay means)
202 cache section
203 multicast processing section (transmission means, first judging means, second judging means)
250 proxy server of distribution server
251 HTTP processing section (transmission means)
252 cache section (storage section)
253 multicast processing section (registration means, relay means)
254 multicast group information storage section
300 distribution server
301 HTTP processing section
302 memory section

## Claims

1. A proxy server configured to (i) receive a content transmitted from a transmission device in response to a request from a communication device, (ii) cache the content in a storage section and (iii) relay the content to the communication device,
the proxy server comprising:
transmission means for transmitting information to the communication device when the proxy server detects transmission from the communication device to the transmission device of a first request that requests for transmission of a certain content via unicast communication, the information indicating that the proxy server is capable of transmitting the certain content via multicast communication in replacement of the transmission device;
registration means for registering the communication device in a multicast group when a second request that requests for transmission of the content via multicast communication is received from the communication device; and
relay means for relaying, via multicast communication, the content cached in the storage section to the communication device and any other communication device registered in the multicast group in advance.

2. The proxy server according to claim 1, wherein
there are a plurality of the communication devices,
the transmission device is configured to be capable of transmitting various contents in response to requests from the communication devices, and
the transmission means transmitting the information to the communication devices only when the proxy server detects that the first request is received from at least a certain number of the communication devices in a certain period of time for a same content.

3. The proxy server according to claims 1 or 2, wherein the first request is a HTTP request message, and
the transmission means transmits the information as a HTTP response message that includes the information as header information thereof,
the header information including a value indicative of an address of the multicast group.

4. The proxy server according to any one of claims 1 to 3, wherein
the transmission device is configured to successively transmit, in response to a request from the communication device, divided data obtained by dividing the content into a plurality of pieces, and
the relay means sequentially relays, to the communication device, the divided data cached in the storage section.

5. The proxy server according to any one of claims 1 to 4, wherein
the content is a video content, and
the video content includes a plurality of movie fragments.

6. The proxy server according to claim 5, wherein
the video content transmitted from the transmission device is data of a multipart form, each part of the multipart form data including one of the movie fragments.

7. The proxy server according to claim 6, wherein
each part of the multipart form data includes, in addition to the movie fragment, a value indicating which number in sequential order of the plurality of movie fragments, the movie fragment included in the respective part is to be reproduced by a reproducing device for reproducing the video content.

8. The proxy server according to any one of claims 5 to 7, wherein
the relay means is configured to relay the video content to be relayed to the communication device by transmitting to the communication device a plurality of packets via multicast communication,
each of the plurality of packets including just data of a whole or a portion of one movie fragment.

9. A proxy server serving as a communication device for a proxy server according to any one of claims 1 to 8 serving as a sender proxy server, the proxy server serving as the communication device being configured to transmit the first request to the sender proxy server,
the proxy server serving as the communication device comprising:
relay means for relaying the content, in response to the first request, to a reproducing device for reproducing the content, the first request being received from the reproducing device; and
first judging means for judging, when the proxy server receives the information as a result of relaying the first request received from the reproducing device, whether or not to transmit the second request to the sender proxy server.

10. The proxy server according to claim 9, wherein
the relay means maintains a connected state with the reproducing device during the relaying of the content to the reproducing device, the connected state being established for replaying the content to the reproducing device, and
when the proxy server receives a first request for transmission of a second content while the relay means is relaying a first content to the reproducing device, the relay means closes a connected state with the reproducing device, which connected state has been established for relaying the first content.

11. The proxy server according to claim 10, further comprising:
transmission means for transmitting, to the sender proxy server, in a case in which the proxy server receives a first request for transmission of the second contents while the relay means is replaying the first content to the reproducing device, a request for removing the proxy server from the multicast group that communication devices to which the first content is being relayed belong to; and
second judging means for judging whether or not a certain period of time has elapsed after the first content is no longer transmitted to the proxy server,
the first judging means judging that the second request should be transmitted to the sender proxy server if the second judging means judges that the certain amount of time has elapsed.

12. A communication system comprising:
a proxy server recited in any one of claims 1 to 8;
a proxy server recited in any one of claims 9 to 11;
the reproducing device for reproducing the content; and
the communication device.

13. A relay method for a proxy server configured to (i) receive a content transmitted from a transmission device in response to a request from a communication device, (ii) cache the content in a storage section and (iii) relay the content to the communication device,
the method comprising:
transmitting information to the communication device when the proxy server detects transmission from the communication device to the transmission device of a first request that requests for transmission of a certain content via unicast communication, the information indicating that the proxy server is capable of transmitting the certain content via multicast communication in replacement of the transmission device;
registering the communication device in a multicast group when a second request that requests for transmission of the content via multicast communication is received from the communication device; and
relaying, via multicast communication, the contents cached in the storage section to the communication device and any other communication device registered in the multicast group in advance.

14. A relay control program for causing a computer to operate as each of means of a proxy server recited in any one of claims 1 to 8.

15. A computer-readable recording medium on which a relay control program recited in claim 14 is stored.

16. A relay control program for causing a computer to operate as each of means of a proxy server recited in any one of claims 9 to 11.

17. A computer-readable recording medium on which a relay control program recited in claim 16 is stored.
